# EUROPEAN PATENT SPECIFICATION

(11) **EP 4 391 652 B1**
(45) Date of publication and mention of the grant of the patent: **16.09.2026**
(21) Application number: 22869420.4
(22) Date of filing: 16.09.2022
(51) Int. Cl.: H04W 4/44, H04W 24/08, H04W 24/10, H04W 12/06, H04W 12/08, H04W 12/122, H04W 48/06, H04W 48/16, H04W 48/18, H04W 60/00

(54) **NETWORK VERIFICATION METHOD AND APPARATUS**
VERFAHREN UND VORRICHTUNG ZUR NETZWERKÜBERPRÜFUNG
PROCÉDÉ ET APPAREIL DE VÉRIFICATION DE RÉSEAU

(30) Priority: 18.09.2021 CN 202111101901
(43) Date of publication of application: 26.06.2024
(73) Proprietor: Huawei Technologies Co., Ltd., Shenzhen, Guangdong 518129 (CN)
(72) Inventor: SUN, Taoran, Shenzhen, Guangdong 518129 (CN); WU, Yizhuang, Shenzhen, Guangdong 518129 (CN); ZHU, Fangyuan, Shenzhen, Guangdong 518129 (CN)
(74) Representative: Isarpatent
(86) International application number: PCT/CN2022/119391
(87) International publication number: WO 2023/041054

(56) References cited:
- WO-A1-2021/054231
- WO-A1-2021/070028
- WO-A1-2021/159415
- CN-A- 112 996 087
- HUAWEI HISILICON: "3GPP TSG-WG SA2 Meeting #143E e-meeting", 9 March 2021 (2021-03-09), XP093223617, Retrieved from the Internet <URL:https://www.3gpp.org/ftp/Email_Discussions/SA2/eNS_Ph2/S2-210xxxx%20DP%20Network%20Slice%20Access%20Control%20Functionalities%20and%20Services_v1.1.docx> [retrieved on 20241112]
- ETSI: "Siret N? 348 623 562 00017 -NAF 742 C Association ? but non lucratif enregistr?e ? la Sous-Pr?fecture de Grasse (06) N? 7803/88", 31 August 2021 (2021-08-31), XP093223910, Retrieved from the Internet <URL:https://www.etsi.org/deliver/etsi_ts/129500_129599/129503/16.08.00_60/ts_129503v160800p.pdf> [retrieved on 20241108]
- "3rd Generation Partnership Project; Technical Specification Group Services and System Aspects; Study on enhancement of network slicing; Phase 2 (Release 17)", 3GPP STANDARD; TECHNICAL REPORT; 3GPP TR 23.700-40, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.3.0, 30 January 2020 (2020-01-30), Mobile Competence Centre ; 650, route des Lucioles ; F-06921 Sophia-Antipolis Cedex ; France , pages 1 - 62, XP051860860
- MOTOROLA MOBILITY, LENOVO: "Solution for network slice authentication and authorisation", 3GPP DRAFT; S2-188261_ENS_SOL-SLICEAUTH_V02, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sophia Antipolis, France; 20180820 - 20180824, 14 August 2018 (2018-08-14), Mobile Competence Centre ; 650, route des Lucioles ; F-06921 Sophia-Antipolis Cedex ; France , XP051537180

## Description

Priority is claimed to Chinese Patent Application No. 202111101901.6, filed with the China National Intellectual Property Administration on September 18, 2021 and entitled "NETWORK VERIFICATION METHOD AND APPARATUS".

### TECHNICAL FIELD

The present invention generally relates to the field of communication technologies, and the invention in particular, relates to a network verification method and apparatus.

### BACKGROUND

To cope with explosive growth of network traffic, a fifth generation (fifth generation, 5G) network needs to be capable of supporting diversified service requirements, to meet requirements of different services on indicators such as a network throughput, a latency, a quantity, and reliability. The 5G network requires a high bandwidth to carry virtual reality, ultra-high-definition videos, and other services. In addition, the 5G network needs to provide massive connections and an ultra-low latency to better serve internet of vehicles services, industrial manufacturing, and the like.

Different application scenarios have different requirements on network functions, system performance, security, user experience, and the like. If a same network is used to provide services, the network is inevitably very complex and cumbersome, and network maintenance costs are also very high. On the contrary, if dedicated networks are provided for different services having different service requirements, and the dedicated networks include only functions required by these services, service efficiency of these services is greatly improved, and network performance is also ensured. This ensures network performance required by an application solution and also simplifies network operations and maintenance.

5G network slicing divides an existing network into independent logical networks to provide customized services for differentiated services. 5G architectures are instantiated based on different quality of service requirements by allocating corresponding network functions and network resources. The logical network of the 5G network slicing is a set of network function resources and network function configurations. The logical network includes network characteristics that meet specific service requirements.

In the 5G network, network slice admission control may be implemented by counting and limiting a quantity of registered UEs on a network slice. After UE accesses the network slice via an AMF, the AMF notifies an NSACF to update the quantity of registered UEs on the network slice. When the quantity of registered UEs on the network slice reaches a maximum value, the NSACF stops the UE from accessing the network slice. However, after the AMF is abnormal or is breached by an attacker, the AMF may maliciously request the NSACF to update quantities of registered UEs on some network slices. Consequently, the quantities of registered UEs on these network slices quickly fulfill a quota, and another UE cannot access these network slices, causing denial of service of these network slices. Therefore, how to prevent the AMF from initiating a DoS attack by using a UE per network slice availability check and authorization procedure is an urgent problem to be resolved currently.

https://www.3gpp.org/ftp/Email_Discussions/SA2/eNS_Ph2/S2-210xxxx%20DP %20Network%20Slice%20Access%20Control%20Functionalities%20and%20Services_v1.1.docx discloses a network slice specific access control function (NSACF) which is defined to control the quota management of network-slice specific quota in access control procedure.

https://www.etsi.org/deliver/etsi_ts/129500_129599/129503/16.08.00_60/ ts_129503v160800p.pdf discloses unified data management services which consider session management subscription data retrieval procedure.

### SUMMARY

The object of the present invention is to provide a network verification method and apparatus, to prevent a malicious mobility management network element from initiating a denial of service attack by requesting to count a terminal device into statistics about a terminal on a network slice that is not occupied by the terminal device. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, a network verification method is provided. The method includes: A slice statistics network element (30) receives a slice registration request message (410) from a mobility management network element (30), where the slice registration request message (101) includes an identifier of a terminal device (10) and an identifier of a network slice. In response to the slice registration request message, the slice statistics network element (30) determines whether the terminal device (10) occupies a resource of the network slice. The slice statistics network element (30) determines, based on a determining result, whether to count the terminal device (10) into statistics about a terminal accessing the network slice.

It should be understood that, that the slice statistics network element (30) herein determines whether the terminal device (10) occupies the resource of the network slice may alternatively be that the slice statistics network element (30) determines whether the terminal device (10) accesses the network slice or the slice statistics network element (30) determines whether the terminal device (10) registers with the network slice.

Based on the foregoing technical solution, the slice statistics network element determines, based on whether the terminal device occupies the resource of the network slice, whether to count the terminal device into the statistics about the terminal accessing the network slice, to prevent a malicious mobility management network element from initiating a denial of service attack by requesting to count the terminal device into statistics about a terminal on a network slice that is not occupied by the terminal device.

With reference to the first aspect according to the invention, that the slice statistics network element (30) determines whether the terminal device (10) occupies a resource of the network slice includes: The slice statistics network element (30) sends a slice information request message (428) to a repository network element (40), where the slice information request message (428) includes the identifier of the terminal device (10), and the slice information request message (428) is used to request to obtain slice information of a network slice occupied by the terminal device (10). The slice statistics network element (30) receives the slice information from the repository network element (40), where the slice information includes any one of the following: a requested network slice of the terminal device (10), a network slice that the terminal device (10) is allowed to access, indication information indicating that the requested network slice of the terminal device (10) is null, and indication information indicating that the allowed network slice of the terminal device (10) is null. The slice statistics network element (30) determines, based on the slice information, whether the terminal device (10) occupies the resource of the network slice.

Based on the foregoing technical solution, the slice statistics network element obtains, via the repository network element, the slice information of the network slice occupied by the terminal device, may determine, based on the slice information, whether the terminal device occupies the resource of the network slice, and therefore may determine whether to count the terminal device into the statistics about the terminal accessing the network slice.

With reference to the first aspect, in some implementations of the first aspect, that the slice statistics network element (20) determines, based on the slice information, whether the terminal device (10) occupies the resource of the network slice includes: When the slice information includes the requested network slice of the terminal device (10), the slice statistics network element (30) verifies whether the network slice belongs to the requested network slice of the terminal device (10), and when the network slice belongs to the requested network slice of the terminal device (10), the slice statistics network element (30) determines that the terminal device occupies the resource of the network slice. Alternatively, when the slice information includes the allowed network slice of the terminal device (10), the slice statistics network element (30) verifies whether the network slice belongs to the allowed network slice of the terminal device (10), and when the network slice belongs to the allowed network slice of the terminal device (10), the slice statistics network element (30) determines that the terminal device (10) occupies the resource of the network slice. Alternatively, when the slice information includes the indication information indicating that the requested network slice of the terminal device (10) is null, the slice statistics network element (30) verifies whether the network slice belongs to a default network slice of the terminal device (10), and when the network slice belongs to the default network slice of the terminal device (10), the slice statistics network element (30) determines that the terminal device occupies the resource of the network slice. Alternatively, when the slice information includes the indication information indicating that the allowed network slice of the terminal device (10) is null, the slice statistics network element (30) determines that the terminal device (10) does not occupy the resource of the network slice.

Based on the foregoing technical solution, the slice statistics network element may flexibly verify, based on content of the obtained slice information, whether the terminal device occupies the resource of the network slice, and therefore may determine whether to count the terminal device into the statistics about the terminal accessing the network slice.

With reference to the first aspect, in some implementations of the first aspect, that the slice statistics network element (30) determines, based on the slice information, whether the terminal device (10) occupies the resource of the network slice includes: The slice statistics network element (30) sends a slice verification request message (421) to a repository network element (40), where the slice verification request message (421) includes the identifier of the terminal device (10) and the identifier of the network slice, and the slice verification request message (421) is used to request to verify whether the terminal device (10) occupies the resource of the network slice. The slice statistics network element (30) receives indication information (426) from the repository network element (40). The slice statistics network element (30) determines, based on the indication information (426), whether the terminal device (10) occupies the resource of the network slice.

Based on the foregoing technical solution, the slice statistics network element may request the repository network element to verify whether the terminal device occupies the resource of the network slice, and therefore may determine whether to count the terminal device into the statistics about the terminal accessing the network slice.

With reference to the first aspect, in some implementations of the first aspect, the method further includes: The slice statistics network element (30) verifies whether the terminal device (10) accesses a network.

With reference to the first aspect, in some implementations of the first aspect, that the slice statistics network element (30) verifies whether the terminal device (10) accesses a network includes: The slice statistics network element (30) sends a terminal information request message to the repository network element (40), where the terminal information request message includes the identifier of the terminal device (10). The slice statistics network element (30) receives status indication information from the repository network element (40). The slice statistics network element (30) determines, based on the status indication information, whether the terminal device (10) accesses the network.

It should be understood that before or when the slice statistics network element (30) determines whether the terminal device (10) occupies the resource of the network slice, the slice statistics network element (30) is requested to verify whether the terminal device (10) accesses the network.

When the slice statistics network element (30) determines that the terminal device (10) does not access the network, the slice statistics network element (30) determines that the terminal device (10) does not access the network slice, the slice statistics network element (30) determines that the mobility management network element is abnormal, the slice statistics network element (30) determines not to count the terminal device (10) into the statistics about the terminal accessing the network slice, or the slice statistics network element (30) rejects or ignores the slice registration request message from the mobility management network element (20).

With reference to the first aspect, in some implementations of the first aspect, before the slice statistics network element (30) determines whether the terminal device (10) occupies the resource of the network slice, the method further includes: The slice statistics network element (30) verifies whether the terminal device (10) accesses the mobility management network element (20), or in other words, the slice statistics network element (30) verifies whether the terminal device (10) corresponds to the mobility management network element (20).

With reference to the first aspect, in some implementations of the first aspect, that the slice statistics network element (30) verifies whether the terminal device (10) accesses the mobility management network element (20) includes: The slice statistics network element (30) sends the slice verification request message (421) to the repository network element (40), where the slice verification request message (421) includes an identifier of the mobility management network element (20). The slice statistics network element (30) receives indication information from the repository network element (40). The slice statistics network element (30) determines, based on the indication information, whether the terminal device (10) accesses the mobility management network element (20).

It should be understood that, before or when the slice statistics network element (30) determines whether the terminal device (10) occupies the resource of the network slice, the slice statistics network element (30) is requested to verify whether the terminal device (10) accesses the mobility management network element (20).

When the slice statistics network element (30) determines that the terminal device (10) does not access the mobility management network element (20), the slice statistics network element (30) determines that the terminal device (10) does not access the network slice, the slice statistics network element (30) determines that the mobility management network element is abnormal, the slice statistics network element (30) determines not to count the terminal device (10) into the statistics about the terminal accessing the network slice, or the slice statistics network element (30) rejects or ignores the slice registration request message from the mobility management network element (20).

With reference to the first aspect, in some implementations of the first aspect, the method further includes: The slice statistics network element (30) verifies whether one or more terminal devices counted into the statistics about the terminal accessing the network slice occupy the resource of the network slice.

In this implementation, when or after verifying the terminal device (10), the slice statistics network element (30) may verify whether other terminal devices counted into the statistics about the terminal accessing the network slice occupy the resource of the network slice. When one or more of the other terminal devices do not occupy the resource of the network slice, or in other words, when one or more of the other terminal devices do not access the network slice, the slice statistics network element (30) deletes the one or more terminal devices from the statistics about the terminal accessing the network slice. Therefore, the statistics about the terminal accessing the network slice can be more accurate.

With reference to the first aspect, in some implementations of the first aspect, the method further includes: The slice statistics network element (30) determines that a statistical quantity of terminals accessing the network slice is greater than or equal to a threshold.

Based on the foregoing technical solution, the slice statistics network element determines whether the terminal device occupies the resource of the network slice only when the statistical quantity of terminals accessing the network slice is greater than or equal to the specified threshold, instead of performing determining in any case, so that resources can be saved.

With reference to the first aspect, in some implementations of the first aspect, that the slice statistics network element (30) determines, based on a determining result, whether to count the terminal device (10) into statistics about a terminal accessing the network slice includes: When the terminal device (10) occupies the resource of the network slice, the slice statistics network element (30) counts the terminal device into the statistics about the terminal accessing the network slice. When the terminal device (10) does not occupy the resource of the network slice, the slice statistics network element (30) does not count the terminal device (10) into the statistics about the terminal accessing the network slice.

Based on the foregoing technical solution, the slice statistics network element may determine, based on the determining result, whether to count the terminal device into the statistics about the terminal accessing the network slice, to prevent the malicious mobility management network element from initiating the denial of service attack by requesting to count the terminal device into the statistics about the terminal accessing the network slice that is not occupied by the terminal device.

With reference to the first aspect, in some implementations of the first aspect, the slice registration request message is used to request to count the terminal device into the statistics about the terminal accessing the network slice.

According to a second aspect according to the invention, a network verification method is provided. The method includes: A repository network element (40) receives a slice verification request message (421) from a slice statistics network element (30), where the slice verification request message (421) includes an identifier of a terminal device (10) and an identifier of a network slice. In response to the slice verification request message (421), the repository network element (40) obtains slice information of a network slice occupied by the terminal device (10), where the slice information includes any one of the following: a requested network slice of the terminal device (10), an allowed network slice of the terminal device (10), indication information indicating that the requested network slice of the terminal device (10) is null, and indication information indicating that the allowed network slice of the terminal device (10) is null. The repository network element (40) verifies, based on the slice information of the terminal device (10), whether the terminal device (10) occupies a resource of the network slice.

Based on the foregoing technical solution, the repository network element determines, based on the slice verification request message, whether the terminal device occupies the resource of the network slice, to indicate a determining result to the slice statistics network element, so that the slice statistics network element may determine whether to count the terminal device into statistics about a terminal accessing the network slice, to prevent a malicious mobility management network element from initiating a denial of service attack by requesting to count the terminal device into statistics about a terminal on a network slice that is not occupied by the terminal device.

With reference to the second aspect, in some implementations of the second aspect, that the repository network element (40) verifies, based on the slice information of the terminal device (10), whether the terminal device (10) occupies a resource of the network slice includes: When the slice information includes the requested network slice of the terminal device (10), the repository network element (40) verifies whether the network slice belongs to the requested network slice of the terminal device (10), and when the network slice belongs to the requested network slice of the terminal device (10), the repository network element (40) determines that the terminal device (10) occupies the resource of the network slice. When the slice information includes the allowed network slice of the terminal device (10), the repository network element (40) verifies whether the network slice belongs to the allowed network slice of the terminal device (10), and when the network slice belongs to the allowed network slice of the terminal device (10), the repository network element (40) determines that the terminal device (10) occupies the resource of the network slice. When the slice information includes the indication information indicating that the requested network slice of the terminal device (10) is null, the repository network element (40) verifies whether the network slice belongs to a default network slice of the terminal device (10), and when the network slice belongs to the default network slice of the terminal device (10), the repository network element (40) determines that the terminal device (10) occupies the resource of the network slice. When the slice information includes the indication information indicating that the allowed network slice of the terminal device (10) is null, the repository network element (40) determines that the terminal device (10) occupies the resource of the network slice.

Based on the foregoing technical solution, the repository network element may flexibly verify, based on content of the obtained slice information, whether the terminal device occupies the resource of the network slice, so that a slice management network element may determine whether to count the terminal device into the statistics about the terminal accessing the network slice.

With reference to the second aspect, in some implementations of the second aspect, that the repository network element (40) obtains slice information of a network slice occupied by the terminal device (10) includes: The repository network element (40) locally obtains the slice information based on the identifier of the terminal device (10).

With reference to the second aspect, in some implementations of the second aspect, that the repository network element (40) obtains slice information of a network slice occupied by the terminal device (10) includes: When the repository network element (40) does not locally have the slice information, the repository network element (40) sends a slice information request message (423) to the terminal device (10), where the slice information request message (423) is used to request to obtain the slice information. The repository network element (40) receives a slice information response message with integrity protection from the terminal device (10), where the slice information response message includes the slice information and an integrity check parameter, and the integrity check parameter is used to verify whether the slice information is tampered with.

Based on the foregoing technical solution, the repository network element may locally obtain the slice information of the network slice occupied by the terminal device, or request the slice information from the terminal device, to determine, based on the slice information, whether the terminal device occupies the resource of the network slice, so that the slice management network element may determine whether to count the terminal device into the statistics about the terminal accessing the network slice.

With reference to the second aspect, in some implementations of the second aspect, the method further includes: The repository network element (40) verifies whether the terminal device (10) accesses a network. When the terminal device (10) does not access the network, the repository network element (40) sends status indication information to the slice management network element (30), where the status indication information indicates whether the terminal device (10) accesses the network, or the repository network element (40) sends verification failure indication information to the slice management network element (30).

With reference to the second aspect, in some implementations of the second aspect, that the repository network element (40) verifies whether the terminal device (10) accesses a network includes: The repository network element (40) obtains a context of the terminal device (10) based on the identifier of the terminal device (10). If the repository network element (40) obtains the context of the terminal device (10), the repository network element (40) determines that the terminal device (10) accesses the network. If the repository network element (40) does not obtain the context of the terminal device (10), the repository network element (40) determines that the terminal device (10) does not access the network.

With reference to the second aspect, in some implementations of the second aspect, the slice verification request message (421) further includes an identifier of a mobility management network element (20), and the method further includes: The repository network element (40) verifies whether the terminal device (10) accesses the mobility management network element (20). When the terminal device (10) does not access the mobility management network element (20), the repository network element (40) sends indication information to the slice management network element (30), where the indication information indicates that the terminal device (10) does not access the mobility management network element (20), or the repository network element (40) sends verification failure indication information to the slice management network element (30).

With reference to the second aspect, in some implementations of the second aspect, that the repository network element (40) verifies whether the terminal device (10) accesses the mobility management network element (20) includes: The repository network element (40) obtains the context of the terminal device (10) based on the identifier of the terminal device (10). The repository network element (40) verifies, based on the context of the terminal device (10), whether the terminal device (10) accesses the mobility management network element (20).

With reference to the second aspect, in some implementations of the second aspect, the method further includes: The repository network element (40) sends a verification request message to a verification network element (50), where the verification request message includes the slice information and the integrity check parameter, and the verification request message is used to request to verify whether the slice information is tampered with. The repository network element (40) receives integrity verification indication information from the verification network element (50). The repository network element (40) determines, based on the integrity verification indication information, whether the slice information is tampered with.

Based on the foregoing technical solution, the repository network element may verify integrity of the slice information from the terminal device based on the integrity check parameter, to prevent the slice information from being tampered with.

With reference to the second aspect, in some implementations of the second aspect, before the repository network element (40) obtains the slice information of the terminal device (10), the method further includes: The repository network element (40) determines that the identifier of the network slice belongs to a subscribed network slice of the terminal device (10).

Based on the foregoing technical solution, before determining whether the terminal device occupies the resource of the network slice, the repository network element first determines whether the identifier of the network slice belongs to the subscribed network slice of the terminal device. When the identifier of the network slice does not belong to the subscribed network slice of the terminal device, the repository network element does not need to perform a subsequent determining procedure, to reduce resource overheads.

With reference to the second aspect, in some implementations of the second aspect, the slice verification request message (424) is used to request to verify whether the terminal device (10) occupies the resource of the network slice.

According to a third aspect, where the third aspect and its implementations and options described below are not claimed, a network verification method is provided. The method includes: When a trigger condition is met, a terminal device (10) generates a message with integrity protection, where the message includes slice information of a network slice occupied by the terminal device (10), and the slice information includes any one of the following: a requested network slice of the terminal device, an allowed network slice of the terminal device, indication information indicating that the requested network slice of the terminal device (10) is null, and indication information indicating that the allowed network slice of the terminal device (10) is null. The terminal device (10) sends the message to a repository network element (40).

Based on the foregoing technical solution, when the trigger condition is met, the terminal device reports the slice information of the network slice occupied by the terminal device to the repository network element. Therefore, when requesting, from a slice management network element, to count the terminal device into statistics about a terminal accessing the network slice, a mobility management network element may determine, via the repository network element, whether the terminal device occupies a resource of the network slice, to determine whether to count the terminal device into the statistics about the terminal accessing the network slice.

With reference to the third aspect, in some implementations of the third aspect, the trigger condition includes any one or more of the following: the terminal device (10) receives a non-access stratum security mode command message; the terminal device (10) receives a registration accept message; and the terminal device (10) receives a slice information request message (423) from the repository network element (40), where the slice information request message (423) is used to request to obtain the slice information.

With reference to the third aspect, in some implementations of the third aspect, the method further includes: The terminal device (10) generates an integrity check parameter by using an integrity key and the slice information, where the message further includes the integrity check parameter, and the integrity check parameter is used to verify whether the slice information is tampered with.

The terminal device performs integrity protection on the slice information sent to the repository network element, so that the slice information can be prevented from being tampered with.

According to a fourth aspect, where the fourth aspect and its implementations and options described below are not claimed, a network verification method is provided. The method includes: A terminal device (10) sends a registration request message to a mobility management network element (20), where the registration request message is used by the terminal device (10) to request to register with a network. The terminal device (10) receives a non-access stratum security mode command message. When the registration request message carries a requested network slice, the terminal device (10) sends slice information to a slice statistics network element (30), where the slice information includes the requested network slice. When the registration request message does not carry a requested network slice, the terminal device (10) sends slice information to a slice statistics network element (30), where the slice information includes indication information indicating that the requested network slice is null.

According to a fifth aspect, where the fifth aspect and its implementations and options described below are not claimed, a network verification method is provided. The method includes: A terminal device (10) sends a registration request message to a mobility management network element (20), where the registration request message is used by the terminal device (10) to request to register with a network. The terminal device (10) receives a registration accept message from the mobility management network element (20). When the registration accept message includes an allowed network slice, the terminal device (10) sends slice information to a slice statistics network element (30), where the slice information includes the allowed network slice. When the registration accept message does not include an allowed network slice, the terminal device (10) sends slice information to a slice statistics network element (30), where the slice information includes indication information indicating that the allowed network slice is null.

According to a sixth aspect according to the invention, a network verification method is provided. The method includes: After a mobility management network element (20) sends slice information of a network slice occupied by a terminal device (10) to a repository network element (40), the mobility management network element (20) sends a registration request message (410) to a slice statistics network element (30), where the registration request message (410) includes an identifier of the terminal device (10) and an identifier of a network slice. Optionally, the registration request message (410) is used to request to count the terminal device (10) into the statistical quantity of terminals accessing the network slice.

In an implementation, the mobility management network element (20) sends the registration request message (410) to the slice statistics network element (30) only when the network slice is included in an allowed network slice of the terminal device (10), and network slice admission control needs to be performed on the network slice, to request the slice statistics network element (30) to perform admission control on the network slice. An admission control procedure herein includes: The slice statistics network element (30) counts the terminal device that occupies a resource of the network slice into statistics about the terminal accessing the network slice.

Based on the foregoing technical solution, the mobility management network element initiates the network slice admission control procedure only after sending the slice information of the terminal device to the repository network element. In the network slice admission control procedure in this case, if the repository network element does not find the slice information of the terminal device locally, it may be determined that the terminal device does not occupy the resource of the network slice, or determined that the terminal device does not access the network slice, and no additional verification is required, to save resources.

According to a seventh aspect, where the seventh aspect and its implementations and options described below are not claimed, a network verification apparatus is provided, including: a transceiver module, configured to receive a slice registration request message (410) from a mobility management network element (30), where the slice registration request message (101) includes an identifier of a terminal device (10) and an identifier of a network slice; and a processing module, configured to: in response to the slice registration request message, determine whether the terminal device (10) occupies a resource of the network slice, where the processing module is further configured to determine, based on a determining result, whether to count the terminal device (10) into statistics about a terminal accessing the network slice.

With reference to the seventh aspect, in some implementations of the seventh aspect, the transceiver module is specifically configured to: send a slice information request message (428) to a repository network element (40), where the slice information request message (428) includes the identifier of the terminal device (10), and the slice information request message (428) is used to request to obtain slice information of a network slice occupied by the terminal device (10); and receive the slice information from the repository network element (40), where the slice information includes any one of the following: a requested network slice of the terminal device (10), a network slice that the terminal device (10) is allowed to access, indication information indicating that the requested network slice of the terminal device (10) is null, and indication information indicating that the allowed network slice of the terminal device (10) is null; and the processing module is specifically configured to determine, based on the slice information, whether the terminal device (10) occupies the resource of the network slice.

With reference to the seventh aspect, in some implementations of the seventh aspect, the processing module is specifically configured to: when the slice information includes the requested network slice of the terminal device (10), verify whether the network slice belongs to the requested network slice of the terminal device (10), and when the network slice belongs to the requested network slice of the terminal device (10), determine that the terminal device occupies the resource of the network slice; the processing module is specifically configured to: when the slice information includes the allowed network slice of the terminal device (10), verify whether the network slice belongs to the allowed network slice of the terminal device (10), and when the network slice belongs to the allowed network slice of the terminal device (10), determine that the terminal device (10) occupies the resource of the network slice; the processing module is specifically configured to: when the slice information includes the indication information indicating that the requested network slice of the terminal device (10) is null, verify whether the network slice belongs to a default network slice of the terminal device (10), and when the network slice belongs to the default network slice of the terminal device (10), determine that the terminal device occupies the resource of the network slice; or the processing module is specifically configured to: when the slice information includes the indication information indicating that the allowed network slice of the terminal device (10) is null, determine that the terminal device (10) does not occupy the resource of the network slice.

With reference to the seventh aspect, in some implementations of the seventh aspect, the transceiver module is specifically configured to: send a slice verification request message (421) to a repository network element (40), where the slice verification request message (421) includes the identifier of the terminal device (10) and the identifier of the network slice, and the slice verification request message (421) is used to request to verify whether the terminal device (10) occupies the resource of the network slice; and receive indication information (426) from the repository network element (40); and the processing module is specifically configured to determine, based on the indication information (426), whether the terminal device (10) occupies the resource of the network slice.

With reference to the seventh aspect, in some implementations of the seventh aspect, the processing module is further configured to determine that a statistical quantity of terminals accessing the network slice is greater than or equal to a threshold.

With reference to the seventh aspect, in some implementations of the seventh aspect, when the terminal device (10) occupies the resource of the network slice, the processing module is specifically configured to count the terminal device into the statistics about the terminal accessing the network slice; or when the terminal device (10) does not occupy the resource of the network slice, the processing module is specifically configured to skip counting the terminal device (10) into the statistics about the terminal accessing the network slice.

With reference to the seventh aspect, in some implementations of the seventh aspect, the first request message is used to request to increase the statistical quantity of terminals accessing the network slice.

According to an eighth aspect, where the eighth aspect and its implementations and options described below are not claimed, a network verification apparatus is provided, including: a transceiver module, configured to receive a slice verification request message (421) from a slice statistics network element (30), where the slice verification request message (421) includes an identifier of a terminal device (10) and an identifier of a network slice; and a processing module, configured to: in response to the slice verification request message (421), obtain slice information of a network slice occupied by the terminal device (10), where the slice information includes any one of the following: a requested network slice of the terminal device (10), an allowed network slice of the terminal device (10), indication information indicating that the requested network slice of the terminal device (10) is null, and indication information indicating that the allowed network slice of the terminal device (10) is null, where the processing module is further configured to verify, based on the slice information of the terminal device (10), whether the terminal device (10) occupies a resource of the network slice.

With reference to the eighth aspect, in some implementations of the eighth aspect, when the slice information includes the requested network slice of the terminal device (10), the processing module is specifically configured to: verify whether the network slice belongs to the requested network slice of the terminal device (10), and when the network slice belongs to the requested network slice of the terminal device (10), the repository network element (40) determines that the terminal device (10) occupies the resource of the network slice; when the slice information includes the allowed network slice of the terminal device (10), the processing module is specifically configured to verify whether the network slice belongs to the allowed network slice of the terminal device (10), and when the network slice belongs to the allowed network slice of the terminal device (10), the processing module is specifically configured to determine that the terminal device (10) occupies the resource of the network slice; when the slice information includes the indication information indicating that the requested network slice of the terminal device (10) is null, the processing module is specifically configured to verify whether the network slice belongs to a default network slice of the terminal device (10), and when the network slice belongs to the default network slice of the terminal device (10), the processing module is specifically configured to determine that the terminal device (10) occupies the resource of the network slice; or when the slice information includes the indication information indicating that the allowed network slice of the terminal device (10) is null, the processing module is specifically configured to determine that the terminal device (10) occupies the resource of the network slice.

With reference to the eighth aspect, in some implementations of the eighth aspect, the processing module is specifically configured to locally obtain the slice information based on the identifier of the terminal device (10).

With reference to the eighth aspect, in some implementations of the eighth aspect, when the processing module does not locally obtain the slice information, the transceiver module is specifically configured to send a slice information request message (423) to the terminal device (10), where the slice information request message (423) is used to request to obtain the slice information; and the transceiver module is specifically configured to receive a slice information response message with integrity protection from the terminal device (10), where the slice information response message includes the slice information and an integrity check parameter, and the integrity check parameter is used to verify whether the slice information is tampered with.

With reference to the eighth aspect, in some implementations of the eighth aspect, the transceiver module is further configured to: send a verification request message to a verification network element (50), where the verification request message includes the slice information and the integrity check parameter, and the verification request message is used to request to verify whether the slice information is tampered with; and receive integrity verification indication information from the verification network element (50); and the processing module is further configured to determine, based on the integrity verification indication information, whether the slice information is tampered with.

With reference to the eighth aspect, in some implementations of the eighth aspect, the processing module is further configured to determine that the identifier of the network slice belongs to a subscribed network slice of the terminal device (10).

With reference to the eighth aspect, in some implementations of the eighth aspect, the slice verification request message (424) is used to request to verify whether the terminal device (10) occupies the resource of the network slice.

According to a ninth aspect, where the ninth aspect and its implementations and options described below are not claimed, a network verification apparatus is provided, including: a processing module, configured to: when a trigger condition is met, generate a message with integrity protection, where the message includes slice information of a network slice occupied by the terminal device (10), and the slice information includes any one of the following: a requested network slice of the terminal device, an allowed network slice of the terminal device, indication information indicating that the requested network slice of the terminal device (10) is null, and indication information indicating that the allowed network slice of the terminal device (10) is null; and a transceiver module, configured to send the message to a repository network element (40).

With reference to the ninth aspect, in some implementations of the ninth aspect, the trigger condition includes any one or more of the following: the transceiver module receives a non-access stratum security mode command message; the transceiver module receives a registration accept message; and the transceiver module receives a slice information request message (423) from the repository network element (40), where the slice information request message (423) is used to request to obtain the slice information.

With reference to the ninth aspect, in some implementations of the ninth aspect, the processing module is further configured to generate an integrity check parameter by using an integrity key and the slice information, where the message further includes the integrity check parameter, and the integrity check parameter is used to verify whether the slice information is tampered with.

According to a tenth aspect according to the invention, a communication apparatus is provided. The apparatus is configured to perform the methods provided in the first aspect to the fifth aspect. Specifically, the apparatus may include units and/or modules configured to perform the methods provided in the first aspect to the fifth aspect, for example, a processing unit and/or a communication unit.

In an implementation, the apparatus is a network device. For example, the apparatus is a slice statistics network element (30), a repository network element (40), or a verification network element (50). When the apparatus is the network device, the communication unit may be a transceiver or an input/output interface, and the processing unit may be a processor.

In another implementation, the apparatus is a chip, a chip system, or a circuit used in a network device. When the apparatus is the chip, the chip system, or the circuit used in a communication device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

In a possible case, the apparatus is the slice statistics network element (30) or a chip, a chip system, or a circuit in the slice statistics network element (30). In this case, the apparatus may include the unit and/or the module configured to perform the method provided in the first aspect, for example, the processing unit and/or the communication unit.

In another possible case, the apparatus is the repository network element (40) or a chip, a chip system, or a circuit in the repository network element (40). In this case, the apparatus may include the unit and/or the module configured to perform the method provided in the second aspect, for example, the processing unit and/or the communication unit.

In another implementation, the apparatus is a terminal device. For example, the apparatus is a terminal device (10). When the apparatus is the terminal device, the communication unit may be a transceiver or an input/output interface, and the processing unit may be a processor.

In a possible case, the apparatus is the terminal device (10) or a chip, a chip system, or a circuit in the terminal device (10). In this case, the apparatus may include units and/or modules configured to perform the method provided in any one of the third aspect to the fifth aspect, for example, a processing unit and/or a communication unit.

Optionally, the transceiver may be a transceiver circuit. Optionally, the input/output interface may be an input/output circuit.

According to an eleventh aspect according to the invention, a communication apparatus is provided. The apparatus includes: a memory, configured to store a program; and a processor, configured to execute the program stored in the memory. When the program stored in the memory is executed, the processor is configured to perform the methods provided in the first aspect to the fifth aspect.

According to a twelfth aspect, where the twelfth aspect and its implementations and options described below are not claimed, this disclosure provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the information, the processor outputs the information to a transceiver, so that the transceiver transmits the information. After the information is outputted by the processor, other processing may further need to be performed on the information before the information arrives at the transceiver. Similarly, when the processor receives the foregoing inputted information, the transceiver obtains/receives the foregoing information, and inputs the information into the processor. Further, after the transceiver receives the foregoing information, other processing may need to be performed on the information before the information is inputted into the processor.

Based on the foregoing principle, for example, receiving a request message mentioned in the foregoing methods may be understood as receiving inputted information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be respectively disposed on different chips. A type of the memory and a manner of disposing the memory and the processor are not limited in this embodiment of this disclosure.

According to a thirteenth aspect, where the thirteenth aspect and its implementations and options described below are not claimed, a computer-readable storage medium is provided. The computer-readable medium stores program code to be executed by a device, and the program code is used to perform the methods provided in the first aspect to the fifth aspect.

According to a fourteenth aspect, where the fourteenth aspect and its implementations and options described below are not claimed, a computer program product including instructions is provided. When the computer program product runs on a computer, the computer is enabled to perform the methods provided in the first aspect to the fifth aspect.

According to a fifteenth aspect, where the fifteenth aspect and its implementations and options described below are not claimed, a chip is provided. The chip includes a processor and a communication interface. The processor reads, via the communication interface, instructions stored in a memory, to perform the methods provided in the first aspect to the fifth aspect.

Optionally, in an implementation, the chip may further include the memory. The memory stores instructions, and the processor is configured to execute the instructions stored in the memory. When the instructions are executed, the processor is configured to perform the methods provided in the first aspect to the fifth aspect.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of a network structure applicable to an embodiment of this invention;
FIG. 2 is a schematic flowchart of a network slice admission control method;
FIG. 3 is a schematic flowchart of another network slice admission control method;
FIG. 4 is a schematic flowchart of a network verification method according to an embodiment of this invention;
FIG. 5A and FIG. 5B are a schematic flowchart of another network verification method according to an embodiment of this invention;
FIG. 6A and FIG. 6B are a schematic flowchart of still another network verification method according to an embodiment of this invention;
FIG. 7 is a schematic block diagram of a network verification apparatus according to an embodiment of this invention;
FIG. 8 is a schematic block diagram of a network verification apparatus according to another embodiment of this application;
FIG. 9 is a schematic block diagram of a network verification apparatus according to still another embodiment of this application; and
FIG. 10 is a schematic block diagram of a network verification apparatus according to yet another embodiment of this application.

### DESCRIPTION OF EMBODIMENTS

To make the objectives, technical solutions, and advantages of this application clearer, the following describes the technical solutions in this application with reference to the accompanying drawings. A specific operation method in a method embodiment may also be applied to an apparatus embodiment or a system embodiment. In descriptions of this application, unless otherwise specified, "a plurality of" means two or more than two.

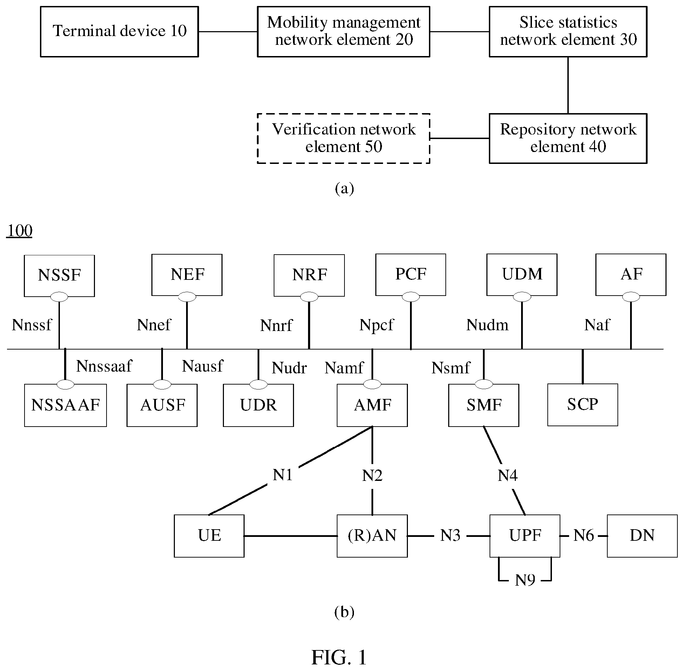

To resolve the problem mentioned in the background, as shown in (a) in FIG. 1, this application provides a communication system. The communication system includes a terminal device (10), a mobility management network element (20), and a slice statistics network element (30). The slice statistics network element (30) is configured to receive a slice registration request message (410) from the mobility management network element (30), where the slice registration request message (410) includes an identifier of the terminal device (10) and an identifier of a network slice. In response to the slice registration request message, the slice statistics network element (30) determines whether the terminal device (10) occupies a resource of a first network slice. The slice statistics network element (30) determines, based on a determining result, whether to count the terminal device (10) into statistics about a terminal on the network slice.

Optionally, the system further includes a repository network element (40) and a verification network element (50). The repository network element (40) is configured to receive a slice verification request message (421) from the slice statistics network element (30), where the slice verification request message (421) includes the identifier of the terminal device (10) and the identifier of the network slice. In response to the slice verification request message (421), the repository network element (40) obtains slice information of a network slice occupied by the terminal device (10), where the slice information includes any one of the following: a requested network slice of the terminal device (10), an allowed network slice of the terminal device (10), indication information indicating that the requested network slice of the terminal device (10) is null, and indication information indicating that the allowed network slice of the terminal device (10) is null. The repository network element (40) verifies, based on the slice information of the terminal device (10), whether the terminal device (10) occupies the resource of the network slice. The verification network element (50) is configured to receive a verification request message from the repository network element, where the verification request message includes the slice information of the network slice occupied by the terminal device (10) and an integrity check parameter, and the integrity check parameter is used to verify whether the slice information is tampered with. The verification network element (50) generates an integrity check parameter based on the slice information and an integrity key. When the integrity check parameter generated by the verification network element (50) is the same as the integrity check parameter carried in the verification request message, the verification network element (50) determines that the slice information is not tampered with.

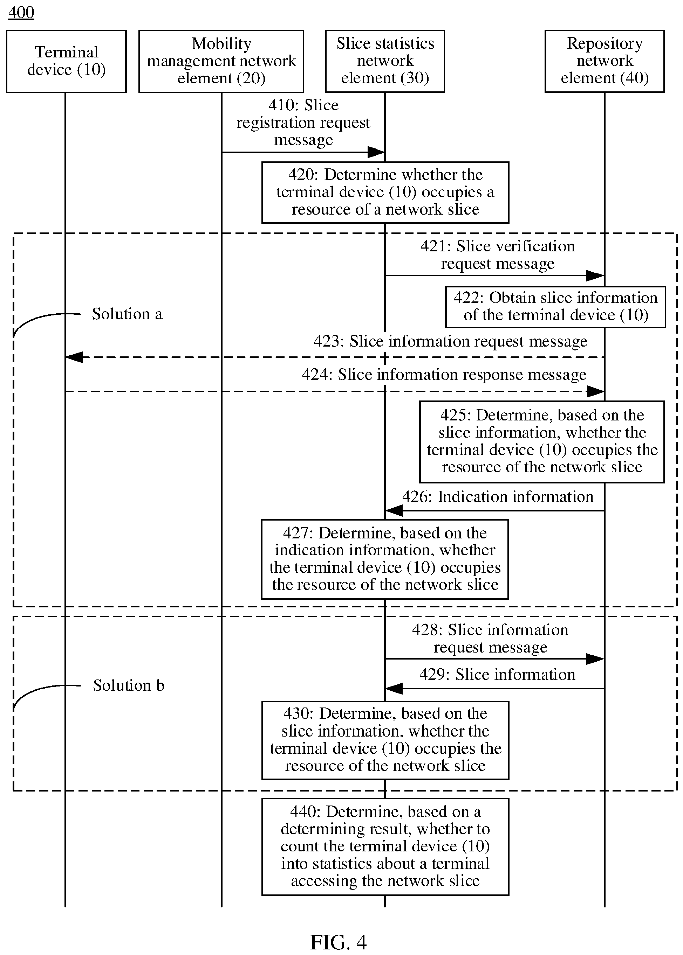

It should be understood that, for a specific interaction process between the network elements in (a) in FIG. 1, refer to the method procedure in FIG. 4. For a specific implementation solution, refer to detailed descriptions in a method 400.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

(b) in FIG. 1 is a schematic diagram of a 5th generation (5th generation, 5G) network architecture based on a service-oriented architecture. It should be understood that the mobility management network element (20) in (a) in FIG. 1 may be an AMF in (b) in FIG. 1. The repository network element (40) in (a) in FIG. 1 may be a UDM in (b) in FIG. 1. The verification network element (50) in (a) in FIG. 1 may be an AUSF in (b) in FIG. 1. The terminal device (10) in (a) in FIG. 1 may be a UE in (b) in FIG. 1. The slice management network element (30) in (a) in FIG. 1 may be an NSACF.

The 5G network architecture shown in (b) in FIG. 1 may include three parts: a terminal device part, a data network (data network, DN) part, and an operator network part. The following briefly describes functions of some network elements in the 5G network architecture.

An operator network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, a session management function (session management function, SMF) network element, a radio access network (radio access network, RAN) network element, a user plane function (user plane function, UPF) network element, and the like. In the foregoing operator network, a part other than a radio access network part may be referred to as a core network part.
1. A terminal device (terminal device), which may also be referred to as a user equipment (user equipment, UE), is a device that has a wireless transceiver function. The terminal device may be deployed on land, where the deployment includes indoor or outdoor, or handheld or vehicle-mounted deployment; may be deployed on water (for example, on a ship); or may be deployed in air (for example, on an airplane, a balloon, and a satellite). The terminal device may be a mobile phone (mobile phone), a tablet computer (pad), a computer that has a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device herein is a 3rd generation partnership project (3rd generation partnership project, 3GPP) terminal. For ease of description, in this application, an example in which the UE represents the terminal device is used for description below.
   The terminal device may establish a connection to the operator network through an interface (for example, N1) provided by the operator network, and use a service such as data and/or a voice provided by the operator network. The terminal device may further access the DN through the operator network, and use an operator service deployed on the DN and/or a service provided by a third party. The third party may be a service party other than the operator network and the terminal device, and may provide a service such as data and/or a voice for the terminal device. A specific representation form of the third party may be specifically determined based on an actual application scenario, and is not limited herein.
2. A radio access network (radio access network, RAN) network element is referred to as a RAN for short in the following, and corresponds to an access network device.

The RAN is a subnet of the operator network, and is an implementation system between a service node in the operator network and the terminal device. To access the operator network, the terminal device first accesses the RAN, and then may be connected to the service node in the operator network via the RAN. The RAN device in this application is a device that provides a wireless communication function for the terminal device, and the RAN device is also referred to as an access network device. The RAN device in this application includes but is not limited to: a next-generation base station (gNodeB, gNB) in 5G, an evolved NodeB (evolved NodeB, eNB), a radio network controller (radio network controller, RNC), and a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmitting and receiving point, TRP), a transmission point (transmitting point, TP), a mobile switching center, and the like. 3. A user plane function (user plane function, UPF) is configured to perform packet routing and forwarding, quality of service (quality of service, QoS) processing of user plane data, and the like.

In a 5G communication system, the user plane network element may be a user plane function (user plane function, UPF) network element. In a future communication system, the user plane network element may still be the UPF network element, or may have another name. This is not limited in this application.

### 4. Multicast/Broadcast-user plane function (multicast/broadcast-user plane function, MB-UPF)

The MB-UPF is mainly responsible for transmitting a multicast/broadcast stream to the RAN (or the UPF), and may perform packet filtering and distribution on the multicast/broadcast stream, to implement QoS enhancement, counting/reporting, and the like of a multicast/broadcast service. The MB-UPF and the UPF in this application are not strictly distinguished, and the (MB-)UPF is used to represent the MB-UPF or the UPF.

5. A data network (data network, DN) is a network used to provide transmitted data.

In the 5G communication system, the data network network element may be a data network network element. In the future communication system, the data network network element may still be the DN network element, or may have another name. This is not limited in this application.

### 6. Access and mobility management network element

The access and mobility management network element is mainly configured to perform mobility management, access management, and the like, and may be configured to implement a function other than session management in MME functions, for example, functions such as lawful interception and access authorization/authentication.

In the 5G communication system, the access and mobility management network element may be an access and mobility management function (access and mobility management function, AMF). In the future communication system, an access and mobility management device may still be the AMF, or may have another name. This is not limited in this application.

7. A session management function (session management function, SMF) is mainly configured to perform session management, user equipment internet protocol (internet protocol, IP) address allocation and management, selection and management of a user plane function, termination of interfaces towards policy control and charging functions, downlink data notification, and the like.

In the 5G communication system, the session management network element may be a session management function network element. In the future communication system, the session management network element may still be the SMF network element, or may have another name. This is not limited in this application.

### 8. Multicast/Broadcast-session management function (multicast/broadcast-session management function, MB-SMF)

The MB-SMF is mainly responsible for multicast/broadcast session management, controls multicast/broadcast transmission, and correspondingly configures the MB-UPF and the RAN based on a multicast/broadcast service policy rule provided by the PCF or locally configured, to complete transmission of the multicast/broadcast stream. The MB-SMF and the SMF in this application are not strictly distinguished, and the (MB-)SMF is used to represent the MB-SMF or the SMF.

9. A policy control function (policy control function, PCF) is a unified policy framework used for instructing network behavior, and provides policy rule information and the like for control plane function network elements (such as the AMF and the SMF).

In a 4G communication system, the policy control network element may be a policy and charging rules function (policy and charging rules function, PCRF) network element. In the 5G communication system, the policy control network element may be a policy control function PCF network element. In the future communication system, the policy control network element may still be the PCF network element, or may have another name. This is not limited in this application.

10. An application function (application function, AF) is configured to perform application-affected data routing, wirelessly access the network exposure function network element, interact with a policy framework to perform policy control, and the like.

In the 5G communication system, the application network element may be an application function network element. In the future communication system, the application network element may still be the AF network element, or may have another name. This is not limited in this application.

11. A unified data management (unified data management, UDM) is configured to process a UE identifier, perform access authentication, registration, mobility management, and the like.

In the 5G communication system, the data management network element may be a unified data management network element. In the 4G communication system, the data management network element may be a home subscriber server (home subscriber server, HSS) network element. In the future communication system, the unified data management may still be the UDM network element, or may have another name. This is not limited in this application.

12. A unified data repository (unified data repository, UDR) mainly includes the following function: an access function for subscription data, policy data, application data, and the like.

13. An authentication server (authentication server function, AUSF) is used for an authentication service, generates a key to implement bidirectional authentication on the user equipment, and supports a unified authentication framework.

In the 5G communication system, the authentication server may be an authentication server function network element. In the future communication system, the authentication server function network element may still be the AUSF network element, or may have another name. This is not limited in this application.

14. A data network (data network, DN) is a network beyond an operator network. The operator network may access a plurality of DNs, and a plurality of services may be deployed on the DN, to provide a service such as data and/or a voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

Nausf, Nnef, Npcf, Nudm, Naf, Namf, Nsmf, N1, N2, N3, N4, and N6 in (b) in FIG. 1 are interface sequence numbers. For meanings of the interface sequence numbers, refer to meanings defined in a 3GPP standard protocol. This is not limited herein.

In the network architecture shown in (b) in FIG. 1, the network elements may communicate with each other through interfaces shown in the figure. As shown in the figure, the UE and the AMF may interact with each other through an N1 interface, and an interaction message may be referred to as, for example, an N1 message (N1 Message). The RAN and the AMF may interact with each other through an N2 interface, and the N2 interface may be for sending a non-access stratum (non-access stratum, NAS) message and the like. The RAN and the UPF may interact with each other through an N3 interface, and the N3 interface may be for transmitting user plane data and the like. The SMF and the UPF may interact with each other through an N4 interface, and the N4 interface may be for transmitting information such as tunnel identifier information of an N3 connection, data buffering indication information, and a downlink data notification message. The UPF and the DN may interact with each other through an N6 interface, and the N6 interface may be for transmitting user plane data and the like. A relationship between other interfaces and the network elements is shown in FIG. 1. For brevity, details are not described herein.

It should be understood that the foregoing network architecture applied to embodiments of this application is merely an example of a network architecture described from the perspective of a service-oriented architecture, and a network architecture applicable to embodiments of this application is not limited thereto. Any network architecture that can implement functions of the foregoing network elements is applicable to embodiments of this application.

It should be further understood that the AMF, the SMF, the UPF, and the network slice selection function network element (network slice selection function, NSSF), the NEF, the AUSF, the NRF, the PCF, and the UDM shown in FIG. 1 may be understood as network elements configured to implement different functions in the core network, for example, may be combined as required to form a network slice. These network elements of the core network may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility that another name is used in the 5G network and another future network. For example, in a 6G network, some or all of the foregoing network elements may still use terms in 5G, or may use other names. A name of an interface between network elements in FIG. 1 is merely an example. In a specific implementation, the name of the interface may be another name. This is not specifically limited in this application. In addition, names of messages (or signaling) transmitted between the foregoing network elements are merely examples, and do not constitute any limitation on functions of the messages.

It may be understood that these network elements or functions may be network elements in a hardware device, may be software functions running on dedicated hardware, or may be virtualized functions instantiated on a platform (for example, a cloud platform). For ease of description, in this application, an example in which the network device is an access and mobility management function AMF and the base station is a radio access network RAN is used for description below.

The terminal device (10), the mobility management network element (20), the slice statistics network element (30), the repository network element (40), and the verification network element (50) in this application may be the UE, the AMF, the NSACF, the UDM, and the AUSF in the 5G system, or may be network elements that have functions of the UE, the AMF, the NSACF, the UDM, and the AUSF in the future communication network such as the 6th generation (6th generation, 6G) network. This is not limited in this application.

It should be understood that the foregoing network architecture applied to embodiments of this application is merely an example for description, and the network architecture applicable to embodiments of this application is not limited thereto. Any network architecture that can implement the functions of the foregoing network elements is applicable to embodiments of this application.

For example, in some network architectures, network function network element entities such as an AMF, an SMF network element, a PCF network element, a BSF network element, and a UDM network element are all referred to as network function (network function, NF) network elements. Alternatively, in some other network architectures, a set of network elements such as an AMF, an SMF network element, a PCF network element, a BSF network element, and a UDM network element may be referred to as a control plane function network element.

Aspects or features in embodiments of this application may be implemented as methods, apparatuses, or products using standard programming and/or engineering techniques. The term "product" used in this application covers a computer program that can be accessed from any computer-readable component, carrier, or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain and/or carry instructions and/or data.

To facilitate understanding of embodiments of this application, terms used in this application are first briefly described.
1. Allowed network slice selection assistance information (Allowed NSSAI):
   The allowed NSSAI is NSSAI provided by a serving PLMN during, for example, a registration procedure, to indicate an S-NSSAI value that may be used by UE in the serving PLMN for a current registration area.
2. Request network slice selection assistance information (Requested NSSAI):
   The requested NSSAI is NSSAI provided by the UE for the serving PLMN during registration.
3. Subscribed single network slice selection assistance information (Subscribed S-NSSAI):
   The subscribed S-NSSAI is S-NSSAI based on user information, and is subscribed to and used by the UE in a PLMN.
4. Default single network slice selection assistance information (Default S-NSSAI):
   The default S-NSSAI is a slice with a default indication in subscribed NSSAI. When the UE does not have a network slice that can be accessed, the UE accesses the network slice by default.
5. Reject network slice selection assistance information (Reject NSSAI):

The reject NSSAI is NSSAI that the UE requests to access during, for example, the registration procedure, but the serving PLMN rejects access of the UE, to indicate an S-NSSAI value that cannot be used by the UE in the serving PLMN for the current registration area.

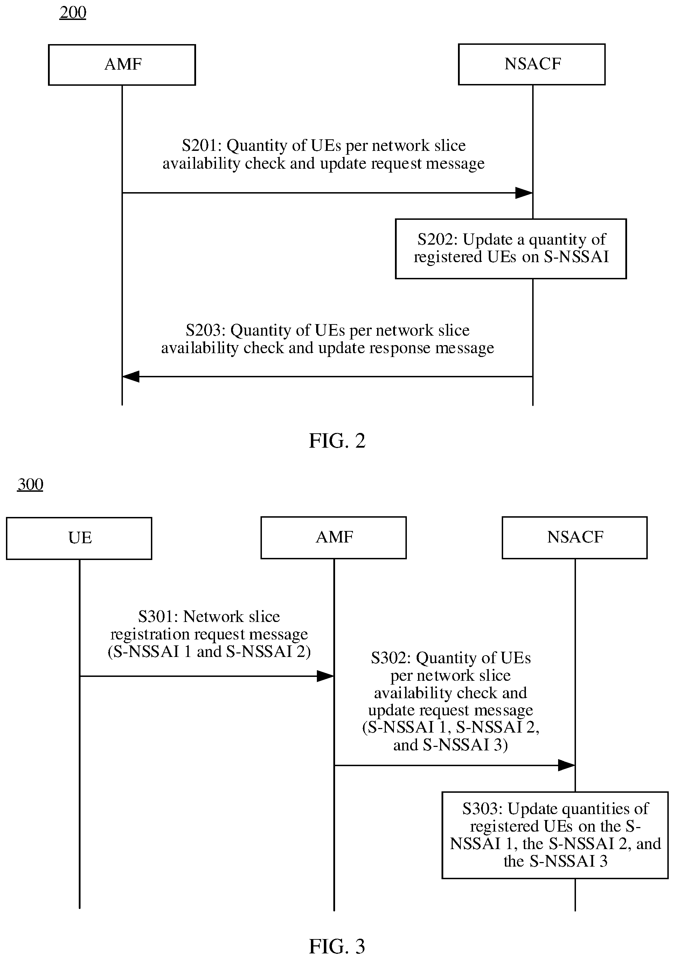

The following describes a network slice admission control method 200 with reference to FIG. 2. The method 200 includes the following steps.

S201: An AMF sends a quantity of UEs per network slice availability check and update request (Nnsacf_NumberOfUEsPerSliceAvailabilityCheckAndUpdate_Request) message to an NSACF.

For example, when a network slice is included in allowed NSSAI (Allowed NSSAI) of one UE or is removed from allowed NSSAI of one UE, and network slice admission control (network slice admission control, NSAC) needs to be performed on the network slice, the AMF initiates a quantity of UEs per network slice availability check and update procedure. Examples of several possible procedure initiation scenarios are as follows:

In an example, the AMF may initiate the quantity of UEs per network slice availability check and update procedure in a UE registration procedure (including initial registration and mobility registration). When an early admission control (early admission control, EAC) mode is activated, the AMF may initiate the procedure before sending a registration accept message to the UE. When an EAC mode is not activated, the AMF may initiate the procedure after sending a registration accept message to the UE.

In another example, the AMF may initiate the quantity of UEs per network slice availability check and update procedure in a UE deregistration procedure.

In still another example, the AMF may initiate the quantity of UEs per network slice availability check and update procedure in a UE configuration update procedure caused by a network slice authentication and authorization procedure or a UE subscribed slice change. When the EAC mode is activated, the AMF initiates the procedure before the UE configuration update procedure. When the EAC mode is not activated, the AMF initiates the procedure after the UE configuration update procedure.

After determining to initiate the quantity of UEs per network slice availability check and update procedure, the AMF sends the quantity of UEs per network slice availability check and update request message to the NSACF. The request message includes a UE ID (where the UE ID is, for example, a subscription permanent identifier (subscription permanent identifier, SUPI)), an access type, S-NSSAI, and an update indication. The update indication indicates to increase a quantity of registered UEs on a slice or reduce a quantity of registered UEs on a slice. In addition, the request message may carry one or more pieces of S-NSSAI. This is not limited in this application.

When the UE has been registered with the S-NSSAI, the update indication indicates to increase the quantity of registered UEs on the slice. When the UE is deregistered from the S-NSSAI, the update indication indicates to reduce the quantity of registered UEs on the slice.

S202: The NSACF updates a quantity of registered UEs on the S-NSSAI.

For example, after receiving the quantity of UEs per network slice availability check and update request message from the AMF, the NSACF updates the quantity of registered UEs on the S-NSSAI based on information carried in the request message.

In an example, if the update indication carried in the quantity of UEs per network slice availability check and update request message indicates to increase the quantity of registered UEs on the slice, the NSACF checks whether the UE ID is in a list of UEs registered with the S-NSSAI, or in other words, the NSACF checks whether the UE ID carried in the request message is in a UE list of the S-NSSAI, that is, checks whether the UE ID has been counted on the S-NSSAI.

When the UE ID is in the list of UEs registered with the S-NSSAI, it indicates that the UE ID has been counted as registered with the S-NSSAI (or in other words, the UE ID has been counted as registered with a network slice identified by the S-NSSAI). In this case, the NSACF does not need to update the quantity of registered UEs on the S-NSSAI. The NSACF creates a new entry associated with this update and temporarily maintains an old entry associated with a previous update (if present). The NSACF deletes the old entry when receiving the request message including the update indication indicating to reduce the quantity of registered UEs on the slice.

When the UE ID is not registered with the UE list of the S-NSSAI and the quantity of registered UEs on the S-NSSAI does not reach a maximum value, the NSACF adds the UE ID to the list of UEs registered with the S-NSSAI and increases the quantity of UEs currently registered with the S-NSSAI.

When the UE ID is not registered with the UE list of the S-NSSAI but the quantity of registered UEs on the S-NSSAI has reached a maximum value, the NSACF returns a result parameter to indicate that the quantity of registered UEs on the S-NSSAI has reached the maximum value.

In another example, if the update indication carried in the quantity of UEs per network slice availability check and update request message indicates to reduce the quantity of registered UEs on the slice, the NSACF checks a quantity of entries associated with the UE ID.

When there is only one entry associated with the UE ID, the NSACF deletes the UE ID from the registered UE list of the S-NSSAI.

When there are two entries associated with the UE ID, the NSACF deletes an old entry and retains a new entry.

S203: The NSACF sends a quantity of UEs per network slice availability check and update response message (the NSACF returns an Nnsacf_UEsPerSliceAvailabilityCheckAndUpdate_Response) to the AMF.

For example, the quantity of UEs per network slice availability check and update response message includes S-NSSAI(s) whose quantity of registered UEs has reached the maximum value and a result parameter, and the result parameter indicates that the quantity of registered UEs on the S-NSSAI(s) has reached the maximum value.

In the UE registration procedure, if the UE requests to register with a plurality of pieces of S-NSSAI, and only a part of the S-NSSAI reaches a maximum quantity of UEs per network slice, the AMF sends a registration accept message to the UE. In addition, the AMF further sends reject NSSAI (Reject NSSAI). The list includes the S-NSSAI(s) whose quantity of registered UEs reaches the maximum value. For each rejected S-NSSAI, the AMF may further include a rejection cause (for example, the maximum quantity of UEs per network slice is reached) and an optional back-off timer in the response message.

If one or more pieces of S-NSSAI requested by the UE in the registration procedure reach the maximum quantity of UEs, but one or more pieces of subscribed S-NSSAI are marked as default (denoted as default S-NSSAI) in subscription data and are not subject to network slice admission control, the AMF may determine to include these default S-NSSAI in the allowed NSSAI. Otherwise, the AMF rejects a registration request of the UE. In a registration reject message, the AMF includes rejected S-NSSAI in a rejected NSSAI parameter.

However, when the AMF is abnormal or is breached by an attacker, the AMF may request the NSACF to update a quantity of registered UEs on a network slice that the UE does not request or subscribes to. This may cause the quantity of registered UEs on the network slice to fulfill a quota soon. Consequently, another UE cannot access the network slice, causing a denial of service of the network slice. With reference to a method 300 in FIG. 3, the following describes a method procedure in which a malicious AMF initiates a denial of service (denial of service, DoS). The method 300 includes the following steps.

S301: A UE sends a network slice registration request message to an AMF.

For example, the network slice registration request message includes S-NSSAI 1 and S-NSSAI 2, that is, the UE requests to register with the S-NSSAI 1 and the S-NSSAI 2 (or requests to register with network slices identified by the S-NSSAI 1 and the S-NSSAI 2).

S302: The AMF sends a quantity of UEs per network slice availability check and update request message to an NSACF.

For example, the AMF is a malicious AMF (for example, the AMF is breached by an attacker), and the quantity of UEs per network slice availability check and update request message carries the S-NSSAI 1, the S-NSSAI 2, and S-NSSAI 3, and further carries a UE ID, an access type, an update indication, and the like. The update indication indicates to increase quantities of registered UEs on network slices S-NSSAI 1, S-NSSAI 2, and S-NSSAI 3.

S303: The NSACF updates the quantities of registered UEs on the S-NSSAI 1, the S-NSSAI 2, and the S-NSSAI 3.

The UE does not request to register with the S-NSSAI 3. Therefore, the NSACF increases the quantity of registered UEs on the S-NSSAI 3 due to the request of the attacker. After the malicious AMF initiates attacks for a plurality of times, the quantity of registered UEs on the S-NSSAI 3 fulfills the quota soon. Consequently, another UE cannot access the network slice.

In view of this, this application provides an authorization and verification method, to prevent a malicious AMF from initiating a DoS attack by using a quantity of UEs per network slice availability check and update procedure.

FIG. 4 is an example flowchart of a method 400 according to an embodiment of this application. The method 400 includes the following steps.

410: A mobility management network element (20) sends a slice registration request message to a slice statistics network element (30).

For example, the slice registration request message includes an identifier of a terminal device (10) and an identifier of a network slice.

Optionally, the slice registration request message may be used to request to increase a statistical quantity of terminals on the network slice.

It should be understood that, in a 5G system, the mobility management network element (20) may be an AMF, and the slice statistics network element (30) may be an NSACF.

420: The slice statistics network element (30) determines whether the terminal device (10) occupies a resource of the network slice.

For example, in response to the slice registration request message, the slice statistics network element (30) determines whether the terminal device (10) occupies the resource of the network slice, or in other words, the slice statistics network element (30) determines whether the terminal device (10) has accessed the network slice, or in other words, the slice statistics network element (30) determines whether the terminal device (10) has been registered with the network slice.

Optionally, before 420, the slice statistics network element (30) determines whether the statistical quantity of terminals on the network slice is greater than or equal to a specified threshold. When the slice statistics network element (30) determines that the statistical quantity of terminals on the network slice is greater than or equal to the specified threshold, the slice statistics network element (30) determines whether the terminal device (10) occupies the resource of the network slice. In other words, when the statistical quantity of terminals on the network slice is less than the specified threshold, it may be unnecessary to verify whether the terminal device (10) occupies the resource of the network slice, so that resource overheads can be reduced.

In addition, it may be further verified whether another terminal device counted into statistics about the terminal accessing the network slice occupies a resource of the network slice. In one manner, when it is determined that the statistical quantity of terminals on the network slice is greater than or equal to the specified threshold, whether all (or a part) of terminal devices that are counted into statistics about the terminal accessing the network slice and the terminal device (10) occupy the resources of the network slice may be synchronously verified. In another manner, when it is determined that the statistical quantity of terminals on the network slice is greater than or equal to the specified threshold, the slice statistics network element (30) first determines whether the terminal device (10) occupies the resource of the network slice, if a determining result indicates that the terminal device (10) occupies the resource of the network slice, the slice statistics network element (30) further verifies whether the terminal device counted into statistics about the terminal accessing the network slice occupies the resource of the network slice. If one or more of these terminal devices do not occupy the resource of the network slice, the slice statistics network element (30) deletes the one or more terminal devices from the statistics about the terminal accessing the network slice.

The following uses the terminal device (10) as an example to describe two possible implementations in which the slice statistics network element (30) determines whether the terminal device (10) occupies the resource of the network slice. It should be understood that a verification manner of another terminal device is similar, and details are not described again. In a possible implementation (denoted as a solution a), the slice statistics network element (30) requests a repository network element (40) to determine whether the terminal device (10) occupies the resource of the network slice. An example is provided.

421: The slice statistics network element (30) sends a slice verification request message to the repository network element (40).

For example, the slice verification request message includes the identifier of the terminal device (10) and the identifier of the network slice.

Optionally, the slice verification request message may be used to request the repository network element (40) to verify whether the terminal device (10) occupies the resource of the network slice.

Correspondingly, the repository network element (40) receives the slice verification request message from the slice statistics network element (30). Then, in response to the slice verification request message, in 422, the repository network element (40) obtains slice information of the terminal device (10).

For example, the repository network element (40) locally obtains the slice information of the terminal device (10) based on the identifier of the terminal device (10). If the repository network element (40) fails to locally obtain the slice information of the terminal device (10), or in other words, if the repository network element (40) does not locally store the slice information of the terminal device (10), the repository network element (40) determines that the terminal device (10) does not occupy the resource of the network slice, or the repository network element (40) requests to obtain the slice information of the terminal device (10) from the terminal device (10), and then determines, based on the slice information, whether the terminal device (10) occupies the resource of the network slice. The following provides detailed descriptions by using an example.

In a possible implementation, when a trigger condition is met, the terminal device (10) generates a message with integrity protection, where the message includes slice information of a network slice occupied by the terminal device (10). Then, the terminal device (10) sends the message to the repository network element (40). After receiving the slice information, the repository network element (40) locally stores the slice information, where the slice information is associated with the identifier of the terminal device (10). The trigger condition herein is, for example, that the terminal device (10) receives a non-access stratum security mode command message, or the terminal device (10) receives a registration accept message. In this implementation, if it is configured that the mobility management network element (20) initiates the slice registration request message in step 410 only after the mobility management network element (20) sends the slice information from the terminal device (10) to the repository network element (40), the network slice is included in an allowed network slice of the terminal device (10), and network slice admission control needs to be performed on the network slice. In this case, if the repository network element (40) does not locally find the slice information associated with the identifier of the terminal device (10) after receiving the slice verification request message from the slice statistics network element (30), the repository network element may determine that the terminal device (10) does not occupy the resource of the network slice. Alternatively, if the repository network element (40) does not locally find the slice information associated with the identifier of the terminal device (10) after receiving the slice verification request message from the slice statistics network element (30), the repository network element may request to obtain the slice information from the terminal device (10). An example is provided.

423: The repository network element (40) sends a slice information request message to the terminal device (10).

For example, the repository network element (40) sends the slice information request message to the terminal device (10) via the mobility management network element (20), where the slice information request message includes the identifier of the terminal device (10), and the slice information request message is used to request to obtain the slice information of the network slice occupied by the terminal device (10).

424: The terminal device (10) sends a slice information response message to the repository network element (40), where the slice information response message includes the slice information.

For example, after receiving the slice information request message from the repository network element (40), the terminal device (10) generates the slice information response message. The response message includes the slice information of the network slice occupied by the terminal device (10). In a case, if the terminal device (10) has sent a registration request message, but the terminal device (10) has not received a registration accept message in response to the registration request message, the slice information includes a requested network slice included by the terminal device (10) in the registration request message. If the terminal device does not include a requested network slice in the registration request message, or in other words, the requested network slice included by the terminal device (10) in the registration request message is null, the slice information includes indication information indicating that the requested network slice of the terminal device (10) is null. In another case, if the terminal device (10) has received a registration accept message, and the registration accept message carries the allowed network slice of the terminal device (10), the slice information includes the allowed network slice of the terminal device (10). If the terminal device (10) has received a registration accept message, and the registration accept message does not carry the allowed network slice of the terminal device (10), or in other words, the allowed network slice of the terminal device (10) carried in the registration accept message is null, the slice information includes indication information indicating that the allowed network slice of the terminal device (10) is null.

In addition, the terminal device (10) performs integrity protection on the slice information response message. For example, the terminal device (10) generates an integrity check parameter by using an integrity key and the slice information, and the terminal device (10) includes the integrity check parameter in the slice information response message. The integrity check parameter is used to verify whether the slice information is tampered with, the integrity key is a key shared between the terminal device (10) and a verification network element (50), and the key is generated in a primary authentication procedure of the terminal device (10).

425: The repository network element (40) determines, based on the slice information, whether the terminal device (10) occupies the resource of the network slice.

For example, after receiving the slice information response message from the terminal device (10), the repository network element (40) obtains the integrity check parameter and the slice information in the slice information response message, and verifies, based on the integrity check parameter, whether the slice information is tampered with. For example, the repository network element (40) sends a verification request message to the verification network element (50), where the verification request message includes the integrity check parameter and the slice information, and the verification request message is used to request to verify whether the slice information is tampered with. Correspondingly, the verification network element (50) receives the verification request message, and then generates an integrity check parameter by using the integrity key and the slice information. If the integrity check parameter generated by the verification network element (50) is the same as the integrity check parameter carried in the verification request message, verification succeeds. If the integrity check parameter generated by the verification network element (50) is not the same as the integrity check parameter carried in the verification request message, verification fails. Then, the verification network element (50) sends integrity verification indication information to the repository network element (40), where the integrity verification indication information indicates whether the slice information is tampered with. Correspondingly, the repository network element (40) receives the integrity verification indication information, and determines, based on the integrity verification indication information, whether the slice information is tampered with. For another example, the repository network element (40) sends a verification request message to the verification network element (50), where the verification request message is used to request to obtain the integrity key shared between the terminal device (10) and the verification network element. The verification network element (50) sends the integrity key to the repository network element (40) based on the verification request message. The repository network element (40) generates an integrity check parameter based on the integrity key and the slice information. If the integrity check parameter generated by the repository network element (40) is the same as the integrity check parameter carried in the verification request message, verification succeeds. If the integrity check parameter generated by the repository network element (40) is not the same as the integrity check parameter carried in the verification request message, verification fails.

If the slice information is not tampered with based on a verification result, the repository network element (40) determines, based on the slice information, whether the terminal device (10) occupies the resource of the network slice. An example is provided.

When the slice information includes the requested network slice of the terminal device (10), the repository network element (40) verifies whether the network slice belongs to the requested network slice of the terminal device (10), and when the network slice belongs to the requested network slice of the terminal device (10), the repository network element (40) determines that the terminal device occupies the resource of the network slice.

Alternatively, when the slice information includes the allowed network slice of the terminal device (10), the repository network element (40) verifies whether the network slice belongs to the allowed network slice of the terminal device (10), and when the network slice belongs to the allowed network slice of the terminal device (10), the repository network element (40) determines that the terminal device (10) occupies the resource of the network slice.

Alternatively, when the slice information includes the indication information indicating that the requested network slice of the terminal device (10) is null, the repository network element (40) verifies whether the network slice belongs to a default network slice of the terminal device (10), and when the network slice belongs to the default network slice of the terminal device (10), the repository network element (40) determines that the terminal device occupies the resource of the network slice.

Alternatively, when the slice information includes the indication information indicating that the allowed network slice of the terminal device (10) is null, the repository network element (40) determines that the terminal device (10) does not occupy the resource of the network slice.

Optionally, before step 422, after receiving the slice verification request message, the repository network element (40) may verify whether the terminal device (10) accesses a network. For example, the repository network element (40) obtains a context of the terminal device (10) based on the identifier of the terminal device (10). If the repository network element (40) obtains the context of the terminal device (10), the repository network element (40) determines that the terminal device (10) accesses the network. If the repository network element (40) does not obtain the context of the terminal device (10), the repository network element (40) determines that the terminal device (10) does not access the network.

When the terminal device (10) does not access the network, the repository network element (40) sends status indication information to a slice management network element (30), where the status indication information indicates whether the terminal device (10) accesses the network, or the repository network element (40) sends verification failure indication information to the slice management network element (30).

Optionally, the slice verification request message in step 421 further includes an identifier of the mobility management network element (20). Before step 422, after receiving the slice verification request message, the repository network element (40) verifies whether the mobility management network element (20) is a mobility management network element accessed by the terminal device (10), or verifies whether the mobility management network element (20) matches the terminal device (10), or verifies whether the terminal device (10) accesses the mobility management network element (20). For example, the repository network element (40) obtains the context of the terminal device (10) based on the identifier of the terminal device (10). The repository network element (40) verifies, based on the context of the terminal device (10), whether the terminal device (10) accesses the mobility management network element (20). For example, the repository network element (40) obtains an identifier of the mobility management network element accessed by the terminal device (10) from the context of the terminal device (10). If the identifier of the mobility management network element accessed by the terminal device (10) is the same as the identifier of the mobility management network element (20), it indicates that the mobility management network element (20) is the mobility management network element accessed by the terminal device (10). When the terminal device (10) does not access the mobility management network element (20), the repository network element (40) sends indication information to the slice management network element (30), where the indication information indicates that the terminal device (10) does not access the mobility management network element (20), or the repository network element (40) sends verification failure indication information to the slice management network element (30).

426: The repository network element (40) sends indication information to the slice statistics network element (30).

Optionally, the indication information indicates whether the terminal device (10) occupies the resource of the network slice, or the indication information indicates whether the terminal device (10) accesses the network slice, or the indication information indicates, to the terminal device (10), an identifier of a terminal device that does not access the network slice, or the indication information indicates, to the terminal device (10), that all terminal devices access the network slice, or the indication information indicates, to the terminal device (10), an identifier of a terminal device that accesses the network slice.

Correspondingly, the slice statistics network element (30) receives the indication information, and determines, based on the indication information, whether the terminal device (10) occupies the resource of the network slice.

It should be understood that the slice statistics network element (30) may verify, in the foregoing manner, all terminal devices counted into the statistics about the terminal accessing the network slice, and delete a terminal device that fails to be verified from the statistics about the terminal accessing the network slice.

If the slice statistics network element (30) verifies all sessions counted into a first network slice, after the verification is completed, the slice statistics network element may set a flag and a timer corresponding to the flag. The flag indicates that all terminal devices counted into the network slice have performed verification, and the timer indicates validity time of the flag. In this case, if a mobility management network element subsequently requests the slice statistics network element (30) to update the statistics about the terminal accessing the network slice, and the flag is still within a validity period, the slice statistics network element (30) needs to verify only a terminal device that the mobility management network element requests to count, and does not need to verify another terminal device that has been counted on the network slice.

In another possible implementation (denoted as a solution b), the slice statistics network element (30) obtains, from the repository network element (40), slice information of a network slice occupied by the terminal device (10), to determine whether the terminal device (10) occupies the resource of the network slice. An example is provided.

428: The slice statistics network element (30) sends a slice information request message to the repository network element (40), where the slice information request message includes the identifier of the terminal device (10), and the slice information request message is used to request to obtain the slice information of the network slice occupied by the terminal device (10).

Correspondingly, the repository network element (40) receives the slice information request message. In response to the slice information request message, the repository network element (40) obtains the slice information of the network slice occupied by the terminal device (10), where the slice information includes any one of the following: a requested network slice of the terminal device (10), an allowed network slice of the terminal device (10), indication information indicating that the requested network slice of the terminal device (10) is null, and indication information indicating that the allowed network slice of the terminal device (10) is null. It should be understood that a manner in which the repository network element (10) obtains the slice information of the terminal device (10) is similar to that in S422, and details are not described herein again.

429: The repository network element (40) sends the slice information to the slice statistics network element (30).

430: The slice statistics network element (30) determines, based on the slice information, whether the terminal device (10) occupies the resource of the network slice.

For example, when the slice information includes the requested network slice of the terminal device (10), the slice statistics network element (30) verifies whether the network slice belongs to the requested network slice of the terminal device (10), and when the network slice belongs to the requested network slice of the terminal device (10), the slice statistics network element (30) determines that the terminal device occupies the resource of the network slice.

Alternatively, when the slice information includes the allowed network slice of the terminal device (10), the slice statistics network element (30) verifies whether the network slice belongs to the allowed network slice of the terminal device (10), and when the network slice belongs to the allowed network slice of the terminal device (10), the slice statistics network element (30) determines that the terminal device (10) occupies the resource of the network slice.

Alternatively, when the slice information includes the indication information indicating that the requested network slice of the terminal device (10) is null, the slice statistics network element (30) verifies whether the network slice belongs to a default network slice of the terminal device (10), and when the network slice belongs to the default network slice of the terminal device (10), the slice statistics network element (30) determines that the terminal device occupies the resource of the network slice.

Alternatively, when the slice information includes the indication information indicating that the allowed network slice of the terminal device (10) is null, the slice statistics network element (30) determines that the terminal device (10) does not occupy the resource of the network slice.

440: The slice statistics network element (30) determines, based on a determining result, whether to count the terminal device (10) into statistics about the terminal accessing the network slice.

For example, when the determining result is that the terminal device (10) occupies the resource of the network slice, the slice statistics network element (30) counts the terminal device into the statistics about the terminal accessing the network slice. When the determining result is that the terminal device (10) does not occupy the resource of the network slice, the slice statistics network element (30) does not count the terminal device (10) into the statistics about the terminal accessing the network slice.

Based on the foregoing technical solution, the slice statistics network element determines, based on whether the terminal device occupies the resource of the network slice, whether to count the terminal device into the statistics about the terminal accessing the network slice, to prevent a malicious mobility management network element from initiating a denial of service attack by requesting to count the terminal device into statistics about a terminal on a network slice that is not occupied by the terminal device.

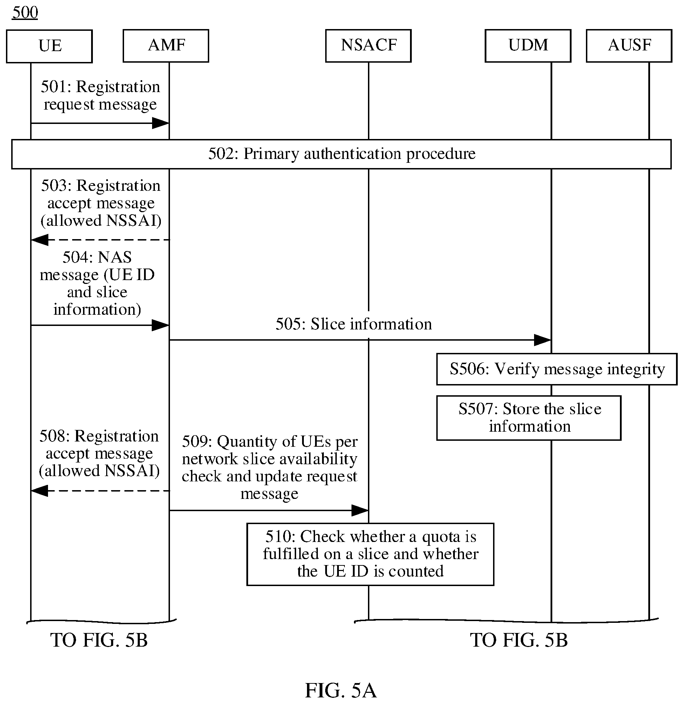

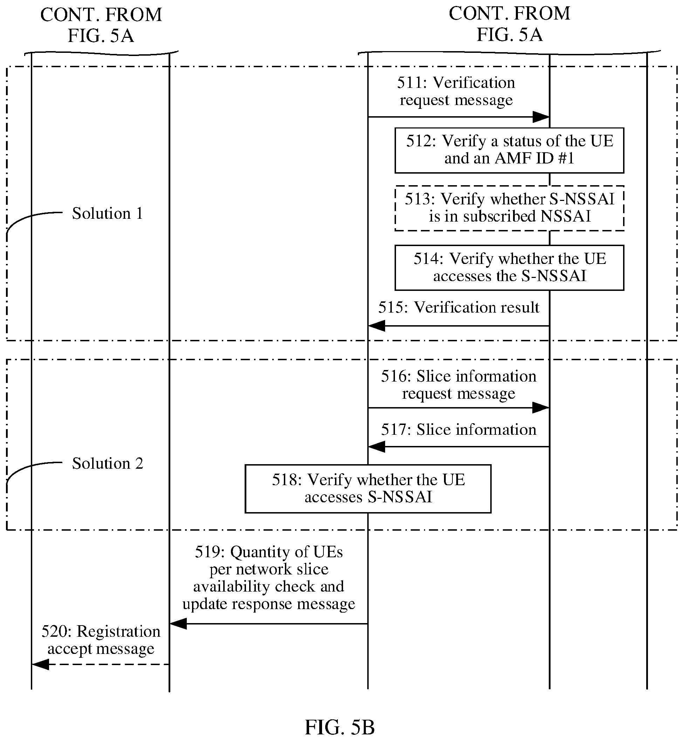

FIG. 5A and FIG. 5B are an example flowchart of a method 500 according to an embodiment of this application. The method 500 includes the following steps.

501: A UE sends a registration request (Registration Request) message to an AMF.

For example, the registration request message includes an identifier of the UE (a UE ID, for example, a SUPI of the UE). Optionally, the registration request message may further include requested NSSAI, and the requested NSSAI may include one or more pieces of S-NSSAI. The registration request message is used by the UE to request to register with the one or more pieces of S-NSSAI, or in other words, the registration request message is used by the UE to perform registration on a network side. It should be understood that, that the UE requests to register with the one or more pieces of S-NSSAI herein means that the UE requests to register with a network slice identified by or associated with the one or more pieces of S-NSSAI. Similar explanations may also be provided for similar expressions in subsequent embodiments, and details are not described again.

If current registration is initial registration, the UE ID may be a SUCI. If current registration is not initial registration, the UE ID may be a GUTI.

502: The UE and the network side complete a primary authentication procedure.

In the primary authentication procedure, the UE and an AUSF separately generate a key Kausf.

It should be noted that, if the UE ID carried in the registration request message is the SUCI, after the primary authentication procedure, a UDM decrypts the SUCI into the SUPI, and sends the SUPI to the AMF. The UE ID used in a subsequent procedure is the SUPI. If the UE ID carried in the registration request message is the GUTI, the AMF maps the GUTI to the SUPI after receiving the registration request. The UE ID used in a subsequent procedure is the SUPI.

Optionally, 503: The AMF sends a registration accept (Registration accept) message to the UE.

For example, after the primary authentication procedure is completed, the AMF sends the registration accept message to the UE, where the registration accept message includes allowed NSSAI. It should be understood that the allowed NSSAI belongs to the requested NSSAI, that is, a slice in the allowed NSSAI is a part or all of slices in the requested NSSAI; or the allowed NSSAI does not belong to the requested NSSAI, that is, a slice in the allowed NSSAI does not include a slice in the requested NSSAI. In this case, the allowed NSSAI belongs to default NSSAI.

504: The UE sends slice information of current registration to the AMF by using a NAS message.

For example, after the primary authentication procedure, or after receiving the registration accept message, the UE may send the slice information of the current registration to the AMF by using the NAS message based on a context of the current registration stored in the UE.

In an example, the NAS message further includes the UE ID, a message type, and slice information of a network slice occupied by the UE, and the message type indicates that the NAS message is used to report the slice information. The slice information includes at least one of the requested NSSAI, the allowed NSSAI, indication information indicating that the requested NSSAI is null, and indication information indicating that the allowed NSSAI is null. The slice information may be carried in a network slice container. The network slice container further includes the UE ID, a container type, and a message authentication code MAC-I. Optionally, the network slice container may further include a freshness parameter. The container type indicates that the network slice container includes slice information corresponding to the UE ID.

In another example, the NAS message includes the UE ID, a message type, a message authentication code MAC-I, and at least one of the requested NSSAI, the allowed NSSAI, indication information indicating that the requested NSSAI is null, and indication information indicating that the allowed NSSAI is null, and optionally further includes a freshness parameter. The message type indicates that the NAS message needs to be transmitted to a UDM corresponding to the UE ID, and the message type further indicates that the NSA message is used to report the slice information. The message authentication code MAC-I may be generated based on all parameters in the NAS message. It should be noted that the message authentication code MAC-I is used to verify integrity of the network slice container, that is, used to verify whether information in the network slice container is tampered with. A manner of generating the MAC-I is not limited in this application. In an example, the UE may generate the MAC-I by using the key Kausf generated in the primary authentication procedure and the UE ID, the slice information, and the container type in the network slice container as input parameters. In another example, the UE may alternatively generate a key Ks by using Kausf, the freshness parameter, and the container type as input parameters, and then generate the MAC-I by using Ks and the UE ID, the slice information, and the container type in the network slice container as input parameters.

For example, the slice information may include at least one of the requested NSSAI, the allowed NSSAI, the indication information indicating that the requested NSSAI is null, and the indication information indicating that the allowed NSSAI is null.

For example, if a registration procedure is not completed, that is, the UE does not receive the registration accept message, a UE context does not include the allowed NSSAI, and the slice information includes the requested NSSAI. For another example, if a registration procedure is completed, that is, the allowed NSSAI is stored in a UE context, the slice information includes the allowed NSSAI, or the slice information includes the allowed NSSAI and the requested NSSAI. For another example, if the UE does not request a network slice during registration initiation (that is, the registration request message does not carry the requested NSSAI), the network slice information may include the indication information indicating that the requested NSSAI is null, and the indication information indicating that the requested NSSAI is null may indicate that the UE does not request the network slice. For another example, if a registration procedure is completed, but the registration accept message does not carry the allowed NSSAI, or an allowed NSSAI list is null, the network slice information may include the indication information indicating that the allowed NSSAI is null, and the indication information indicating that the allowed NSSAI is null may indicate that an allowed NSSAI list is null. It should be understood that if the UE does not request the network slice during registration initiation, but the UE obtains the allowed NSSAI from the registration accept message, the slice information may include both the allowed NSSAI and the indication information indicating that the requested NSSAI is null. In this case, the indication information indicating that the requested NSSAI is null indicates that the UE does not request the network slice during registration initiation.

505: The AMF sends the slice information to the UDM.

For example, after receiving the NAS message from the UE, the AMF sends the network slice container to the UDM based on the message type in the NAS message. The network slice container includes the slice information, the UE ID, the container type, and the message authentication code MAC-I. Optionally, the network slice container further includes the freshness parameter.

506: The UDM verifies message integrity via the AUSF.

For example, after receiving the network slice container from the AMF, the UDM determines, based on the container type, that the network slice container includes the slice information reported by the UE, finds, based on the UE ID and the corresponding AUSF in the UE context, the AUSF that stores a UE root key Kausf, and requests the AUSF to verify integrity of the network slice container. A specific manner of verifying the message integrity is not limited in this application. The following provides two specific examples.

In an example, the UDM sends, to the AUSF, parameters for generating the MAC-I, where the parameters include the UE ID, the slice information, and the container type. If the MAC-I is generated by using Ks, the UDM also needs to send the freshness parameter to the AUSF. After receiving the parameters, the AUSF generates a MAC-I-AUSF by using Kausf, the UE ID, the slice information, and the container type as input parameters. If the parameters include the freshness parameter, the AUSF first generates the key Ks by using Kausf, the freshness parameter, and the container type as input parameters, and then generates a MAC-I-AUSF by using Ks, the UE ID, the slice information, and the container type as input parameters. The AUSF returns the generated MAC-I-AUSF to the UDM. The UDM compares the MAC-I-AUSF with the MAC-I. If values are the same, verification succeeds. If values are different, verification fails.

In the other example, the UDM sends the network slice container to the AUSF, and the AUSF generates a MAC-I-AUSF in the foregoing manner, and then compares the MAC-I-AUSF with the MAC-I. If values are the same, verification succeeds. If values are different, verification fails. The AUSF returns a verification result to the UDM.

507: The UDM stores the slice information.

For example, if the message integrity verification in step 506 succeeds, the UDM stores the slice information reported by the UE as the UE context.

Optionally, 508: The AMF sends the registration accept (Registration accept) message to the UE.

It should be noted that, because a quantity of UEs per network slice availability check and update procedure may occur in the registration procedure, or may occur after the registration procedure, the UE may report the slice information to the UDM via the AMF in the registration procedure, or may report the slice information to the UDM via the AMF after the registration procedure. Therefore, if the registration procedure is not completed in 503, that is, the AMF does not send the registration accept message to the UE in 503, the AMF may send the registration accept message to the UE in 508, where the registration accept message carries the allowed NSSAI.

509: The AMF sends a quantity of UEs per network slice availability check and update request (Nnsacf_NumberOfUEsPerSliceAvailabilityCheckAndUpdate_Request) message to an NSACF.

For example, after the AMF sends the slice information to the UDM, when a network slice is included in the allowed NSSAI of the UE, and network slice admission control needs to be performed on the network slice, the AMF determines to initiate the quantity of UEs per network slice availability check and update procedure, and sends the quantity of UEs per network slice availability check and update request message to the NSACF. The request message includes the UE ID, an AMF ID #1, an access type, S-NSSAI, and an update indication. The AMF ID #1 is used to identify the AMF. The quantity of UEs per network slice availability check and update request message is used to request to update a quantity of registered UEs on a first network slice, and the first network slice corresponds to the S-NSSAI. The update indication indicates to increase the quantity of registered UEs on the first network slice or reduce the quantity of registered UEs on the first network slice. In addition, the request message may carry one or more pieces of S-NSSAI. This is not limited in this application.

510: The NSACF checks whether a quota is fulfilled on a slice and whether the UE ID is counted.

For example, the NSACF receives the quantity of UEs per network slice availability check and update request message from the AMF. If the update indication carried in the request message indicates to increase the quantity of registered UEs on the first network slice, the NSACF checks whether the quantity of registered UEs on the first network slice fulfills a quota, that is, checks whether the quantity of registered UEs on the first network slice reaches a maximum value, or checks whether the quantity of registered UEs on the first network slice reaches a specified threshold.

If the quantity of registered UEs on the first network slice fulfills the quota, the NSACF sends, to the AMF, an indication that the quota is fulfilled on the first network slice.

If the quantity of registered UEs on the first network slice does not fulfill the quota, the NSACF further checks whether the UE corresponding to the UE ID is counted on the first network slice, or whether the UE ID is in a registered UE list of the first network slice. If the UE has been counted, the NSACF generates a new entry and sends a corresponding result parameter to the AMF.

If the quota is not fulfilled on the first network slice, and the UE is not counted on the first network slice, the NSACF first counts the UE on the first network slice. A counting process is shown in S202. After the counting is completed, the NSACF sends a quantity of UEs per network slice availability check and update response (Nnsacf_NumberOfUEsPerSliceAvailabilityCheckAndUpdate_Response) message to the AMF, as shown in S203. Optionally, the NSACF determines whether the quantity of UEs on the first network slice reaches the specified threshold. If the specified threshold is reached, the NSACF further verifies all registered UEs (denoted as UEs) on the first network slice. The UEs include the UE identified by the UE ID in 509. Verification content includes statuses of the UEs, whether the UEs match the AMF, and whether the UEs match the first network slice.

In a possible implementation solution (denoted as a solution 1), the NSACF requests the UDM to perform verification. An example is provided.

511: The NSACF sends a verification request message to the UDM.

Herein, the UE (that is, the UE corresponding to the UE ID in step 509) in this embodiment of this application is used as an example for description. A manner of verifying another UE is similar to this, and details are not described again. It should be understood that the NSACF may simultaneously request the UDM to verify all UEs in the UEs, or may verify another UE in the other UEs after verifying the UE. In the latter case, that is, the UE is verified first, the another UE may be verified when the verification on the UE fails. If the verification on the UE succeeds, the another UE in the UEs may not be verified. This is not limited in this application.

For example, the NSACF finds, based on the UE ID, the UDM corresponding to the UE, and sends the verification request message to the UDM. The verification request message includes the UE ID, the AMF ID #1, and the S-NSSAI.

512: The UDM verifies a status of the UE and the AMF ID #1.

For example, the UDM detects, based on the UE ID, the UE context corresponding to the UE. If no UE context is detected, it indicates that the UE does not access a network, and verification fails. The UDM returns a verification failure response message to the AMF, and the response message carries a cause value. If the UE context is detected, the UDM further verifies the AMF ID #1 based on AMF information stored in the UE context. In other words, the UDM further verifies whether the AMF ID #1 carried in the verification request message matches an AMF actually accessed by the UE. Specifically, the UDM obtains an AMF ID #2 by using the AMF information in the UE context, where the AMF ID #2 is used to identify the AMF accessed by the UE, and the UDM verifies whether the AMF ID #1 is the same as the AMF ID #2. If the AMF ID #1 is the same as the AMF ID #2, the verification succeeds. If the AMF ID #1 is not the same as the AMF ID #2, the verification on the UE fails, and the UDM records the UE ID of the failed UE.

Optionally, 513: The UDM checks whether the S-NSSAI is in subscribed NSSAI (Subscribed NSSAI).

For example, the UDM finds locally stored UE subscription information based on the UE ID, obtains subscribed NSSAI corresponding to the UE, and then checks whether the S-NSSAI carried in the verification request message is in the subscribed NSSAI. If the S-NSSAI carried in the verification request message is not in the subscribed NSSAI, the verification fails, and the UDM sends a verification failure response message to the NSACF, where the response message carries a cause value. If the verification succeeds, whether the UE accesses the S-NSSAI is further verified (or whether the UE occupies a resource of the S-NSSAI is further verified, or whether the UE is registered with the S-NSSAI is further verified, or whether the S-NSSAI matches the slice information of the UE is further verified, or whether the S-NSSAI belongs to the requested NSSAI/allowed NSSAI/default NSSAI of the UE is further verified).

For example, if the UDM does not store the slice information associated with the UE ID, the verification fails.

Alternatively, in another possible implementation, if the UDM does not store the slice information associated with the UE ID, the UDM requests the slice information of the UE from the UE via the AMF. For example, the UDM sends a slice information request message to the UE via the AMF, where the slice information request message is used to request the slice information of the UE, the slice information request message carries the UE ID and a message type, and the message type indicates that the request message is used to request the slice information. After sending the slice information request message to the AMF, the UDM may set a timer. If the UDM does not receive the slice information reported by the UE when the timer expires, the UDM determines that the verification fails, and sends a verification failure response message to the NSACF, where the response message carries a cause value. Correspondingly, after the AMF receives the slice information request message sent by the UDM, the AMF sends the slice information request message to the UE. After the UE receives the slice information request message, the UE reports, to the UDM via the AMF, the slice information of the current registration. It should be understood that the UE performs integrity protection on the slice information, to prevent the slice information from being tampered with. 514: The UDM verifies whether the UE accesses the S-NSSAI.

For example, the UDM verifies, based on the slice information reported by the UE, whether the UE accesses the S-NSSAI.

If the slice information includes the indication information indicating that the allowed NSSAI is null, it indicates that the allowed NSSAI list in the registration accept message received by the UE is null, and the verification fails.

If the slice information includes the indication information indicating that the requested NSSAI is null, it indicates that the UE does not request the network slice. In this case, the UDM verifies whether the S-NSSAI belongs to the default NSSAI. If the S-NSSAI belongs to the default NSSAI, the verification succeeds. If the S-NSSAI does not belong to the default NSSAI, the verification fails.

If the slice information includes the requested NSSAI, the UDM verifies whether the S-NSSAI belongs to the requested NSSAI. If the S-NSSAI belongs to the requested NSSAI, the verification succeeds. If the S-NSSAI does not belong to the requested NSSAI, the verification fails.

If the slice information includes the allowed NSSAI, the UDM verifies whether the S-NSSAI belongs to the allowed NSSAI. If the S-NSSAI belongs to the allowed NSSAI, the verification succeeds. If the S-NSSAI does not belong to the allowed NSSAI, the verification fails.

If the slice information includes the requested NSSAI and the allowed NSSAI, the UDM verifies whether the S-NSSAI in the request message belongs to the allowed NSSAI. If the S-NSSAI in the request message belongs to the allowed NSSAI, the verification succeeds. If the S-NSSAI in the request message does not belong to the allowed NSSAI, the verification fails.

515: The UDM sends a verification result to the NSACF.

For example, if the verification fails, the verification result includes the UE ID.

It should be understood that if the NSACF requests the UDM to verify all the UEs in the UEs, the verification result includes IDs of all UEs that fail to be verified and failure cause values. If there is no UE that fails to be verified, the verification result includes an indication that verification on all the UEs succeeds.

In another possible implementation solution (denoted as a solution 2), the NSACF obtains verification information from the UDM, and then performs verification based on the verification information. An example is provided.

516: The NSACF sends a slice information request message to the UDM.

For example, the NSACF finds the corresponding UDM based on the UE ID, and sends the slice information request message to the UDM, where the slice information request message is used to request to obtain the slice information of the UE, and the slice information request message includes the UE ID of the UE.

Correspondingly, the UDM receives the slice information request message.

The UDM finds a corresponding UE context based on the UE ID in the slice information request message. If the UDM does not store the corresponding UE context, the UDM returns an indication that there is no the UE context to the NSACF. If the UDM stores the UE context, step 517 continues to be performed.

517: The UDM sends the slice information of the UE to the NSACF.

For example, the UDM sends, to the NSACF, the slice information reported by the UE.

The UDM further sends, to the NSACF, information about an AMF accessed by the UE. The information about the AMF is, for example, (or includes) an AMF ID #2, and the AMF ID #2 is used to identify the AMF actually accessed by the UE.

518: The NSACF verifies whether the S-NSSAI matches the slice information.

The NSACF determines, based on the information about the AMF accessed by the UE, whether the AMF in the quantity of UEs per network slice availability check and update request message is the AMF accessed by the UE. For example, the NSACF verifies whether the AMF ID #1 is the same as the AMF ID #2. If the AMF ID #1 is the same as the AMF ID #2, the verification succeeds. If the AMF ID #1 is not the same as the AMF ID #2, the verification fails.

The NSACF checks whether the S-NSSAI carried in the quantity of UEs per network slice availability check and update request message matches the slice information of the UE.

Same as the verification step in 514. If the slice information includes the indication information indicating that the requested NSSAI is null, it indicates that the UE does not request the network slice. In this case, the UDM verifies whether the S-NSSAI belongs to the default NSSAI. If the S-NSSAI belongs to the default NSSAI, the verification succeeds. If the S-NSSAI does not belong to the default NSSAI, the verification fails.

If the slice information includes the requested NSSAI, the UDM verifies whether the S-NSSAI belongs to the requested NSSAI. If the S-NSSAI belongs to the requested NSSAI, the verification succeeds. If the S-NSSAI does not belong to the requested NSSAI, the verification fails.

If the slice information includes the allowed NSSAI, the UDM verifies whether the S-NSSAI belongs to the allowed NSSAI. If the S-NSSAI belongs to the allowed NSSAI, the verification succeeds. If the S-NSSAI does not belong to the allowed NSSAI, the verification fails.

If the slice information includes the requested NSSAI and the allowed NSSAI, the UDM verifies whether the S-NSSAI in the request message belongs to the allowed NSSAI. If the S-NSSAI in the request message belongs to the allowed NSSAI, the verification succeeds. If the S-NSSAI in the request message does not belong to the allowed NSSAI, the verification fails.

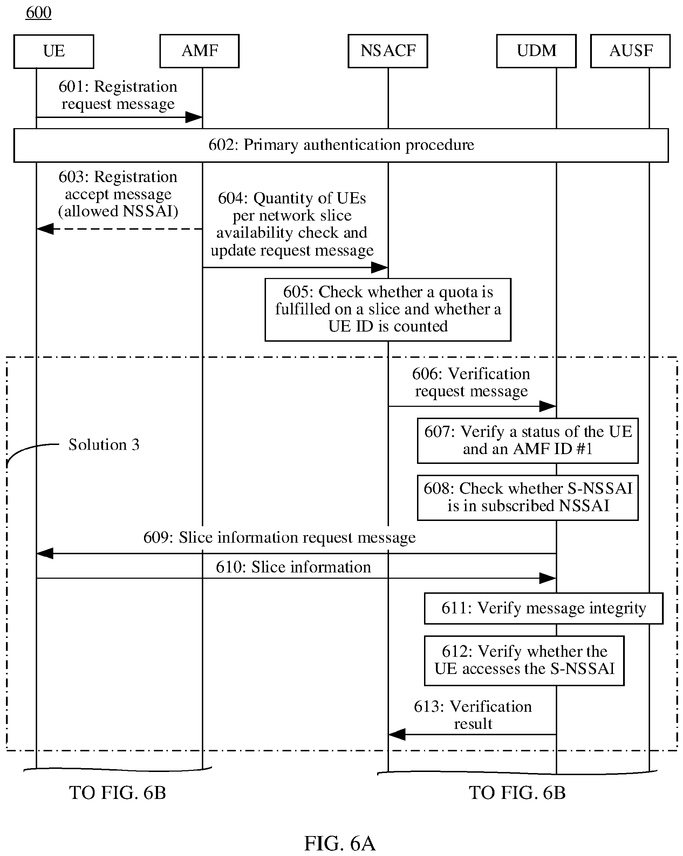

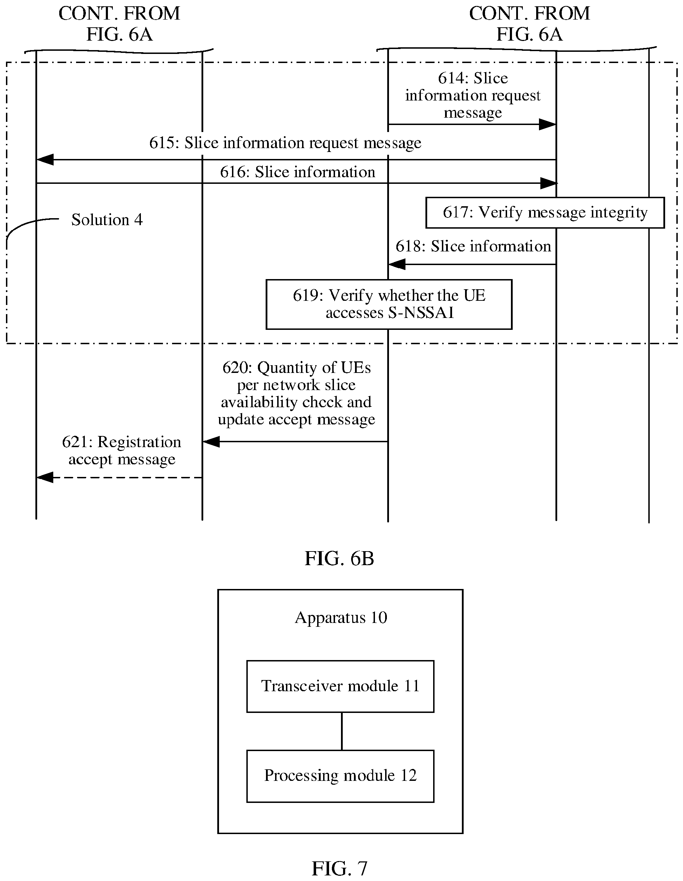

519: The NSACF deletes, based on the verification result, count information of the UE for the UE that fails to be verified. When a quantity of verified UEs on an AMF exceeds a threshold, the NSACF considers that the AMF is attacked, and ignores a quantity of UEs per network slice availability check and update response (Nnsacf_NumberOfUEsPerSliceAvailabilityCheckAndUpdate_Response) message that is subsequently sent by the AMF. FIG. 6A and FIG. 6B are an example flowchart of a method 600 according to an embodiment of this application. The method 600 includes the following steps.

601: A UE sends a registration request (Registration Request) message to an AMF.

602: The UE and a network side complete a primary authentication procedure.

Optionally, 603: The AMF sends a registration accept (Registration accept) message to the UE.

It should be understood that 601 to 603 are similar to S501 to S503 in the method 500, and details are not described herein again.

604: The AMF sends a quantity of UEs per network slice availability check and update request (Nnsacf_NumberOfUEsPerSliceAvailabilityCheckAndUpdate_Request) message to an NSACF, where the request message includes a UE ID, an AMF ID #1, an access type, S-NSSAI, and an update indication.

605: The NSACF checks whether a quota is fulfilled on a slice and whether the UE ID is counted.

It should be understood that 604 and 605 are similar to S509 and S510 in the method 500, and details are not described herein again.

If a quota is not fulfilled on a first network slice, and the UE is not counted on the first network slice. Optionally, the NSACF determines whether a quantity of UEs on the first network slice reaches a specified threshold. If the specified threshold is reached, the NSACF further verifies a status of the UE, whether the UE matches the AMF, and whether the UE matches the first network slice. The first network slice corresponds to the S-NSSAI in the quantity of UEs per network slice availability check and update request message.

In a possible implementation solution (denoted as a solution 3), the NSACF requests a UDM to perform verification. An example is provided.

606: The NSACF sends a verification request message to the UDM.

For example, the NSACF finds the corresponding UDM based on the UE ID, and sends the verification request message to the UDM. The verification request message includes the UE ID, the S-NSSAI, and an AMF ID.

607: The UDM verifies the status of the UE and the AMF ID #1.

It should be understood that 607 is similar to S512 in the method 500, and details are not described herein again.

608: The UDM checks whether the S-NSSAI is in subscribed NSSAI.

For example, the UDM obtains, based on locally stored UE subscription information, the subscribed NSSAI corresponding to the UE, and then checks whether the S-NSSAI carried in the verification request message is in the subscribed NSSAI.

Further optionally, the UDM may further detect whether the S-NSSAI is in default NSSAI.

If the S-NSSAI belongs to the default NSSAI, the UDM may send a verification success response message to the NSACF. If the S-NSSAI does not belong to the subscribed NSSAI, the UDM may send a verification failure response message to the NSACF, where the response message carries a cause value. If the S-NSSAI belongs to the subscribed NSSAI but does not belong to the default NSSAI, the UDM may further request to obtain slice information of the UE from the UE via the AMF. An example is provided.

609: The UDM sends a slice information request message to the UE via the AMF.

The slice information request message is used to request the slice information of the UE, the slice information request message carries the UE ID and a message type, and the message type indicates that the request message is used to request the slice information. After sending the slice information request message to the AMF, the UDM may set a timer. If the UDM does not receive the slice information reported by the UE when the timer expires, the UDM determines that the verification fails, and sends a verification failure response message to the NSACF, where the response message carries a cause value. Correspondingly, after the AMF receives the slice information request message sent by the UDM, the AMF sends the slice information request message to the UE,

610: The UE reports the slice information to the UDM via the AMF.

For example, after the UE receives the slice information request message, the UE reports the slice information of current registration and a message authentication code MAC-I to the UDM via the AMF.

The message authentication code is used to perform integrity protection on the slice information, to prevent the slice information from being tampered with. A specific manner is similar to the manner of generating the message authentication code described in S504 in the method 500, and details are not described again.

611: The UDM verifies message integrity.

A method for verifying message integrity in 611 is similar to the solution described in S506 in the method 500, and details are not described again.

612: The UDM verifies whether the UE accesses the S-NSSAI.

For example, the UDM verifies, based on the slice information reported by the UE, whether the UE accesses the S-NSSAI.

If the slice information includes indication information indicating that allowed NSSAI is null, it indicates that an allowed NSSAI list in the registration accept message received by the UE is null, and the verification fails.

If the slice information includes indication information indicating that requested NSSAI is null, it indicates that the UE does not request a network slice. In this case, the UDM verifies whether the S-NSSAI belongs to the default NSSAI. If the S-NSSAI belongs to the default NSSAI, the verification succeeds. If the S-NSSAI does not belong to the default NSSAI, the verification fails.

If the slice information includes requested NSSAI, the UDM verifies whether the S-NSSAI belongs to the requested NSSAI. If the S-NSSAI belongs to the requested NSSAI, the verification succeeds. If the S-NSSAI does not belong to the requested NSSAI, the verification fails.

If the slice information includes allowed NSSAI, the UDM verifies whether the S-NSSAI belongs to the allowed NSSAI. If the S-NSSAI belongs to the allowed NSSAI, the verification succeeds. If the S-NSSAI does not belong to the allowed NSSAI, the verification fails.

613: The UDM sends a verification result to the NSACF.

For example, the verification result includes the UE ID. If the verification result is that the verification fails, a failure cause may be further carried.

In another possible implementation solution (denoted as a solution 4), the NSACF obtains verification information from the UDM, and then performs verification based on the verification information. An example is provided.

614: The NSACF sends a slice information request message to the UDM.

For example, the NSACF finds the corresponding UDM based on the UE ID, and sends the slice information request message to the UDM, where the slice information request message is used to request to obtain the slice information of the UE, and the slice information request message includes the UE ID of the UE.

615: The UDM sends the slice information request message to the UE via the AMF.

616: The UE reports the slice information to the UDM via the AMF.

617: The UDM verifies message integrity.

615 to 617 are similar to 609 to 611, and details are not described again.

618: The UDM sends the slice information to the NSACF. For example, the UDM sends, to the NSACF, the slice information reported by the UE.

The UDM further sends, to the NSACF, UE status indication information and information about an AMF accessed by the UE. The information about the AMF is, for example, (or includes) an AMF ID #2, and the AMF ID #2 is used to identify the AMF actually accessed by the UE.

619: The NSACF verifies whether the UE accesses the S-NSSAI.

It should be understood that 619 is similar to S518 in the method 500, and details are not described again.

620: The NSACF sends a quantity of UEs per network slice availability check and update response (Nnsacf_NumberOfUEsPerSliceAvailabilityCheckAndUpdate_Response) message to the AMF.

For example, if information carried in the quantity of UEs per network slice availability check and update request message is successfully verified, the NSACF updates the quantity of registered UEs on the first network slice based on the request message, and returns a quantity of UEs per network slice availability check and update response message to the AMF, where the response message indicates that the quantity of UEs is successfully updated. If information carried in the quantity of UEs per network slice availability check and update request message fails to be verified, the NSACF returns a quantity of UEs per network slice availability check and update response message to the AMF, where the response message indicates that the verification fails, or the response message is used to reject the quantity of UEs per network slice availability check and update request message. Optionally, a failure or rejection cause may be further carried.

Optionally, in 621, the AMF sends a registration accept message to the UE.

For example, the foregoing procedure may occur in a registration procedure of the UE, or may occur after the registration procedure. If the foregoing procedure occurs after the registration procedure of the UE, the AMF may send the registration accept message to the UE after the foregoing quantity of UEs per network slice availability check and update procedure is completed. The registration accept message includes the allowed NSSAI.

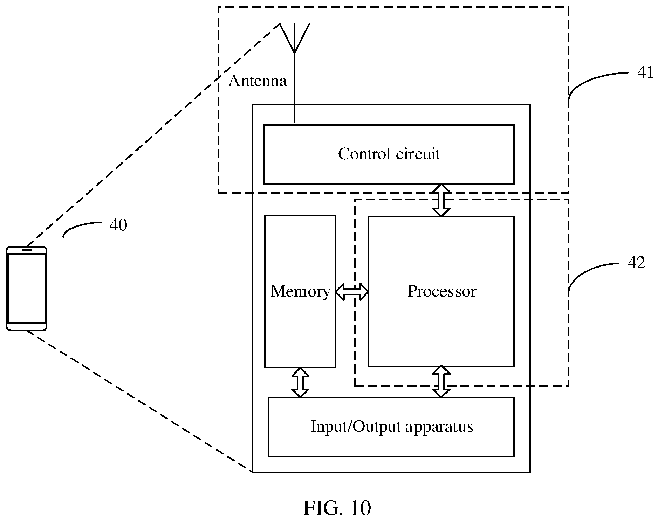

The foregoing describes in detail the methods provided in embodiments of this application with reference to FIG. 4 to FIG. 6A and FIG. 6B. The following describes in detail apparatuses provided in embodiments of this application with reference to FIG. 7 and FIG. 10. It should be understood that descriptions of apparatus embodiments correspond to the descriptions of the method embodiments. Therefore, for content that is not described in detail, refer to the method embodiments. For brevity, details are not described herein again.

FIG. 7 is a schematic block diagram of a network verification apparatus 10 according to an embodiment of this application. The apparatus 10 includes a transceiver module 11 and a processing module 12. The transceiver module 11 may implement a corresponding communication function, and the processing module 12 is configured to perform data processing. The transceiver module 11 may also be referred to as a communication interface or a communication unit.

In a possible design, the apparatus 10 may correspond to the slice statistics network element (20) (or the NSACF) in the foregoing method embodiments.

For example, the apparatus 10 may correspond to the slice statistics network element (20) in the method 400 in embodiments of this application, or the UDM in the method 500 and the method 600. The apparatus 10 may include modules configured to perform the methods performed by the slice statistics network element (20) (or the NSACF) in FIG. 4 to FIG. 6A and FIG. 6B. In addition, the units in the apparatus 10 and the foregoing other operations and/or functions are respectively used to implement corresponding procedures of the methods shown in FIG. 4 to FIG. 6A and FIG. 6B.

The transceiver module 11 in the apparatus 10 performs receiving and sending operations performed by the slice statistics network element (20) (or the NSACF) in the foregoing method embodiments, and the processing module 12 performs operations other than the receiving and sending operations.

In another possible design, the apparatus 10 may correspond to the terminal device (10) (or the UE) in the foregoing method embodiments.

For example, the apparatus 10 may correspond to the terminal device (10) in the method 400 in embodiments of this application, or the UE in the method 500 and the method 600. The apparatus 10 may include modules configured to perform the methods performed by the terminal device (10) (or the UE) in FIG. 4 to FIG. 6A and FIG. 6B. In addition, the units in the apparatus 10 and the foregoing other operations and/or functions are respectively used to implement corresponding procedures of the methods shown in FIG. 4 to FIG. 6A and FIG. 6B.

The transceiver module 11 in the apparatus 10 performs receiving and sending operations performed by the terminal device (10) (or the UE) in the foregoing method embodiments, and the processing module 12 performs operations other than the receiving and sending operations.

In still another possible design, the apparatus 10 may correspond to the repository network element (40) (or the UDM) in the foregoing method embodiments.

For example, the communication apparatus 10 may correspond to the repository network element (40) in the method 400 in embodiments of this application, or the NSACF in the method 500 and the method 600. The apparatus 10 may include modules configured to perform the methods performed by the repository network element (40) (or the UDM) in FIG. 4 to FIG. 6A and FIG. 6B. In addition, the units in the apparatus 10 and the foregoing other operations and/or functions are respectively used to implement corresponding procedures of the methods shown in FIG. 4 to FIG. 6A and FIG. 6B.

The transceiver module 11 in the apparatus 10 performs receiving and sending operations performed by the repository network element (40) (or the UDM) in the foregoing method embodiments, and the processing module 12 performs operations other than the receiving and sending operations.

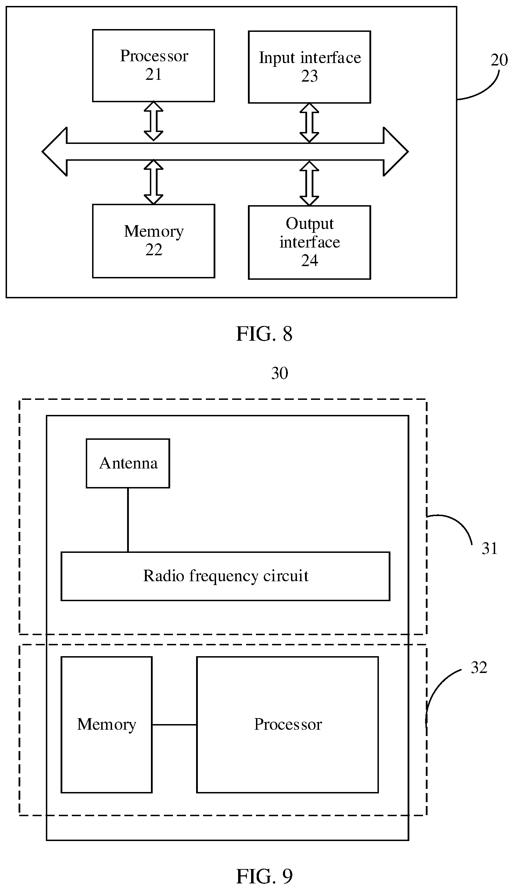

According to the foregoing methods, FIG. 8 is a schematic diagram of a network verification apparatus 20 according to an embodiment of this application. In a possible design, the apparatus 20 may correspond to the slice statistics network element (20) (or the NSACF) in the foregoing method embodiments. In another possible design, the apparatus 10 may correspond to the terminal device (10) (or the UE) in the foregoing method embodiments. In still another possible design, the apparatus 10 may correspond to the repository network element (40) (or the UDM) in the foregoing method embodiments.

The apparatus 20 may include a processor 21 (that is, an example of a processing module) and a memory 22. The memory 22 is configured to store instructions, and the processor 21 is configured to execute the instructions stored in the memory 22, so that the apparatus 20 implements the steps performed by the terminal device or the network device in the methods corresponding to FIG. 4 to FIG. 6A and FIG. 6B.

Further, the apparatus 20 may further include an input interface 23 (that is, an example of a transceiver module) and an output interface 24 (that is, another example of the transceiver module). Further, the processor 21, the memory 22, the input interface 23, and the output interface 24 may communicate with each other through an internal connection path, to transmit a control signal and/or a data signal. The memory 22 is configured to store a computer program. The processor 21 may be configured to invoke the computer program from the memory 22 and run the computer program, to control the input interface 23 to receive a signal, and control the output interface 24 to send a signal, to complete the steps performed by the terminal device or the network device in the foregoing methods. The memory 22 may be integrated into the processor 21, or may be disposed separately from the processor 21.

Optionally, if the communication apparatus 20 is a communication device, the input interface 23 is a receiver, and the output interface 24 is a transmitter. The receiver and the transmitter may be a same physical entity or different physical entities. When the receiver and the transmitter are a same physical entity, the receiver and the transmitter may be collectively referred to as a transceiver.

Optionally, if the communication apparatus 20 is a chip or a circuit, the input interface 23 is an input interface, and the output interface 24 is an output interface.

In an implementation, it may be considered that functions of the input interface 23 and the output interface 24 are implemented by a transceiver circuit or a dedicated transceiver chip. It may be considered that the processor 21 is implemented by a dedicated processing chip, a processing circuit, a processor, or a general-purpose chip.

In another implementation, it may be considered that the communication device provided in this embodiment of this application is implemented by a general-purpose computer. To be specific, program code that is used to implement functions of the processor 21, the input interface 23, and the output interface 24 is stored in the memory 22, and a general-purpose processor implements the functions of the processor 21, the input interface 23, and the output interface 24 by executing the code in the memory 22.

For concepts, explanations, detailed descriptions, and other steps of the apparatus 20 that are related to the technical solutions provided in embodiments of this application, refer to the descriptions of the content in the foregoing methods or other embodiments. Details are not described herein again.

FIG. 9 is a simplified schematic diagram of a structure of a network device 30. The network device includes a part 31 and a part 32. The part 31 is mainly configured to transmit and receive a radio frequency signal and convert a radio frequency signal and a baseband signal. The part 32 is mainly configured to perform baseband processing, control the network device, and the like. The part 31 may be generally referred to as a transceiver module, a transceiver, a transceiver circuit, a transceiver machine, or the like. The part 32 is generally a control center of the network device, and may be generally referred to as a processing module, and is configured to control the network device to perform a processing operation on a network device side in the foregoing method embodiments.

The transceiver module in the part 31 may also be referred to as a transceiver, a transceiver machine, or the like, and includes an antenna and a radio frequency circuit. The radio frequency circuit is mainly configured to perform radio frequency processing. For example, a component configured to implement a receiving function in the part 31 may be considered as a receiving module, and a component configured to implement a sending function may be considered as a sending module. In other words, the part 31 includes the receiving module and the sending module. The receiving module may also be referred to as a receiver, a receiver machine, a receiver circuit, or the like, and the sending module may be referred to as a transmitter, a transmitter machine, a transmitter circuit, or the like.

The part 32 may include one or more boards, and each board may include one or more processors and one or more memories. The processor is configured to read and execute a program in the memory to implement a baseband processing function and control the network device. If there are a plurality of boards, the boards may be interconnected with each other, to enhance a processing capability. In an optional implementation, a plurality of boards may share one or more processors, a plurality of boards may share one or more memories, or a plurality of boards may simultaneously share one or more processors.

For example, in an implementation, the network device shown in FIG. 9 may be any network device shown in the methods shown in FIG. 4 to FIG. 6A and FIG. 6B, for example, a mobility management network element (20), a slice statistics network element (30), a repository network element (40), or a verification network element (50).

The transceiver module in the part 31 is configured to perform receiving and sendingrelated steps of any network device in the methods shown in FIG. 4 to FIG. 6A and FIG. 6B. The part 32 is configured to perform processing-related steps of any network device in the methods shown in FIG. 4 to FIG. 6A and FIG. 6B.

It should be understood that FIG. 9 is merely an example rather than a limitation, and the foregoing network device including the transceiver module and the processing module may not depend on the structure shown in FIG. 9.

When the network device 30 is a chip, the chip includes a transceiver module and a processing module. The transceiver module may be an input/output circuit or a communication interface. The processing module is a processor, a microprocessor, or an integrated circuit integrated on the chip.

FIG. 10 is a schematic diagram of a structure of a terminal device 40 according to this application. For ease of description, FIG. 10 shows only main components of the terminal device. As shown in FIG. 10, the terminal device 40 includes a processor, a memory, a control circuit, an antenna, and an input/output apparatus.

The processor is mainly configured to process a communication protocol and communication data, control an entire terminal device, execute a software program, and process data of the software program, for example, is configured to support the terminal device in performing the actions described in the foregoing embodiments of the indication method for transmitting a precoding matrix. The memory is mainly configured to store the software program and the data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor may read a software program in a storage unit, explain and execute instructions of the software program, and process data of the software program. When data needs to be sent wirelessly, the processor performs baseband processing on the to-be-sent data, and then outputs a baseband signal to the radio frequency circuit. The radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor, and the processor converts the baseband signal into data and processes the data.

A person skilled in the art may understand that, for ease of description, FIG. 10 shows only one memory and only one processor. In an actual terminal device, there may be a plurality of processors and memories. The memory may also be referred to as a storage medium, a storage device, or the like. This is not limited in this embodiment of this application.

In an optional implementation, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 10 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance a processing capability, and components of the terminal device may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be embedded in the processor, or may be stored in a storage unit in a form of the software program. The processor executes the software program to implement a baseband processing function.

As shown in FIG. 10, the terminal device 40 includes a transceiver unit 41 and a processing unit 42. The transceiver unit may also be referred to as a transceiver, a transceiver machine, a transceiver apparatus, or the like. Optionally, a component configured to implement the receiving function in the transceiver unit 41 may be considered as a receiving unit, and a component configured to implement the sending function in the transceiver unit 41 may be considered as a sending unit. In other words, the transceiver unit 41 includes the receiving unit and the sending unit. For example, the receiving unit may also be referred to as a receiver, a receiver machine, a receiver circuit, or the like, and the sending unit may be referred to as a transmitter, a transmitter machine, a transmitter circuit, or the like.

The terminal device shown in FIG. 10 may perform the actions performed by the terminal device in the methods shown in FIG. 4 to FIG. 6A and FIG. 6B. To avoid repetition, detailed descriptions thereof are omitted herein.

An embodiment of this application further provides a computer-readable storage medium. The computer-readable storage medium stores computer instructions used to implement the method performed by the network device in the foregoing method embodiments.

For example, when the computer program is executed by a computer, the computer is enabled to implement the method performed by the network device in the foregoing method embodiments.

An embodiment of this application further provides a computer program product including instructions. When the instructions are executed by a computer, the computer is enabled to implement the method performed by the first device or the method performed by the second device in the foregoing method embodiments.

An embodiment of this application further provides a communication system. The communication system includes the network device in the foregoing embodiments.

For explanations and beneficial effects of related content in any one of the foregoing provided apparatuses, refer to the corresponding method embodiments provided above. Details are not described herein again.

In embodiments of this application, the network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not particularly limited in embodiments of this application, provided that communication can be performed according to the method provided in embodiments of this application by running a program that records code of the method provided in embodiments of this application. For example, the method provided in embodiments of this application may be performed by a network device, or a functional module in the network device that can invoke and execute a program.

Various aspects or features of this application may be implemented as methods, apparatuses, or products using standard programming and/or engineering techniques. The term "product" used in this specification may cover a computer program that can be accessed from any computer-readable component, carrier, or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, an erasable programmable read-only memory (erasable programmable read-only memory, EPROM), a card, a stick, or a key drive).

Various storage media described in this specification may indicate one or more devices and/or other machine-readable media that are configured to store information. The term "machine-readable medium" may include but is not limited to a radio channel and various other media that can store, contain and/or carry instructions and/or data.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, a memory (storage module) may be integrated into the processor.

It should be further noted that the memory described in this specification is intended to include but is not limited to these memories and any memory of another proper type.

A person of ordinary skill in the art may be aware that, in combination with the examples described in embodiments disclosed in this specification, units and steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the protection scope of this application.

It may be clearly understood by a person skilled in the art that, for the purpose of convenient and brief description, for a detailed working process of the foregoing apparatus, and unit, refer to a corresponding process in the foregoing method embodiments. Details are not described herein again.

In the several embodiments provided in this application, it should be understood that the disclosed apparatuses and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, (SSD)), or the like. For example, the foregoing usable media may include but are not limited to: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims and the specification.

## Claims

1. A network verification method, comprising:
receiving (S410), by a slice statistics network element (30), a slice registration request message (410) from a mobility management network element (20), wherein the slice registration request message (410) comprises an identifier of a terminal device (10) and an identifier of a network slice;
in response to the slice registration request message (410), determining (S420), by the slice statistics network element (30), whether the terminal device (10) occupies a resource of the network slice; and
determining (S440), by the slice statistics network element (30) based on a determining result, whether to count the terminal device (10) into statistics about a terminal accessing the network slice; and
wherein the determining (S420), by the slice statistics network element (30), whether the terminal device (10) occupies a resource of the network slice comprises:
sending, by the slice statistics network element (30), a slice information request message (428) to a repository network element (40), wherein the slice information request message (428) comprises the identifier of the terminal device (10), and the slice information request message (428) is used to request to obtain slice information of a network slice occupied by the terminal device (10);
receiving, by the slice statistics network element (30), the slice information from the repository network element (40), wherein the slice information comprises any one of the following: a requested network slice of the terminal device (10), a network slice that the terminal device (10) is allowed to access, indication information indicating that the requested network slice of the terminal device (10) is null, and indication information indicating that the allowed network slice of the terminal device (10) is null; and
determining (S430), by the slice statistics network element (30) based on the slice information, whether the terminal device (10) occupies the resource of the network slice; and
wherein the identifier of a network slice is a single network slice selection assistance information.

2. The method according to claim 1, wherein the determining, by the slice statistics network element (30) based on the slice information, whether the terminal device (10) occupies the resource of the network slice comprises:
when the slice information comprises the requested network slice of the terminal device (10), verifying, by the slice statistics network element (30), whether the network slice belongs to the requested network slice of the terminal device (10), and when the network slice belongs to the requested network slice of the terminal device (10), determining, by the slice statistics network element (30), that the terminal device occupies the resource of the network slice;
when the slice information comprises the allowed network slice of the terminal device (10), verifying, by the slice statistics network element (30), whether the network slice belongs to the allowed network slice of the terminal device (10), and when the network slice belongs to the allowed network slice of the terminal device (10), determining, by the slice statistics network element (30), that the terminal device (10) occupies the resource of the network slice;
when the slice information comprises the indication information indicating that the requested network slice of the terminal device (10) is null, verifying, by the slice statistics network element (30), whether the network slice belongs to a default network slice of the terminal device (10), and when the network slice belongs to the default network slice of the terminal device (10), determining, by the slice statistics network element (30), that the terminal device occupies the resource of the network slice; or
when the slice information comprises the indication information indicating that the allowed network slice of the terminal device (10) is null, determining, by the slice statistics network element (30), that the terminal device (10) does not occupy the resource of the network slice.

3. The method according to claim 1, wherein the determining, by the slice statistics network element (30) based on the slice information, whether the terminal device (10) occupies the resource of the network slice comprises:
sending, by the slice statistics network element (30), a slice verification request message (421) to a repository network element (40), wherein the slice verification request message (421) comprises the identifier of the terminal device (10) and the identifier of the network slice, and the slice verification request message (421) is used to request to verify whether the terminal device (10) occupies the resource of the network slice;
receiving, by the slice statistics network element (30), indication information (426) from the repository network element (40); and
determining, by the slice statistics network element (30) based on the indication information (426), whether the terminal device (10) occupies the resource of the network slice.

4. The method according to any one of claims 1 to 3, further comprising:
verifying, by the slice statistics network element (30), whether the terminal device (10) accesses a network.

5. The method according to claim 4, wherein the verifying, by the slice statistics network element (30), whether the terminal device (10) accesses a network comprises:
sending, by the slice statistics network element (30), a terminal information request message to the repository network element (40), wherein the terminal information request message comprises the identifier of the terminal device (10);
receiving, by the slice statistics network element (30), status indication information from the repository network element (40); and
determining, by the slice statistics network element (30) based on the status indication information, whether the terminal device (10) accesses the network.

6. The method according to claim 4 or 5, further comprising:
when the slice statistics network element (30) determines that the terminal device (10) does not access the network, rejecting or ignoring, by the slice statistics network element (30), the slice registration request message (410).

7. The method according to any one of claims 1 to 3, wherein the method further comprises:
verifying, by the slice statistics network element (30), whether the terminal device (10) accesses the mobility management network element (20).

8. The method according to claim 7, wherein the verifying, by the slice statistics network element (30), whether the terminal device (10) accesses the mobility management network element (20) comprises:
sending, by the slice statistics network element (30), the slice verification request message (421) to the repository network element (40), wherein the slice verification request message (421) comprises an identifier of the mobility management network element (20);
receiving, by the slice statistics network element (30), indication information from the repository network element (40); and
determining, by the slice statistics network element (30) based on the indication information, whether the terminal device (10) accesses the mobility management network element (20).

9. The method according to claim 7 or 8, further comprising:
when the slice statistics network element (30) determines that the terminal device (10) does not access the mobility management network element (20), rejecting or ignoring, by the slice statistics network element (30), the slice registration request message (410).

10. The method according to any one of claims 1 to 9, further comprising:
verifying, by the slice statistics network element (30), whether one or more terminal devices counted into the statistics about the terminal accessing the network slice occupy the resource of the network slice.

11. The method according to any one of claims 1 to 10, wherein the determining, by the slice statistics network element (30) based on a determining result, whether to count the terminal device (10) into statistics about a terminal accessing the network slice comprises:
when the terminal device (10) occupies the resource of the network slice, counting, by the slice statistics network element (30), the terminal device into the statistics about the terminal accessing the network slice; or
when the terminal device (10) does not occupy the resource of the network slice, skipping, by the slice statistics network element (30), counting the terminal device (10) into the statistics about the terminal accessing the network slice.

12. A network verification method, comprising:
receiving, by a repository network element (40), a slice verification request message (421) from a slice statistics network element (30), wherein the slice verification request message (421) comprises an identifier of a terminal device (10) and an identifier of a network slice;
in response to the slice verification request message (421), obtaining, by the repository network element (40), slice information of a network slice occupied by the terminal device (10), wherein the slice information comprises any one of the following: a requested network slice of the terminal device (10), an allowed network slice of the terminal device (10), indication information indicating that the requested network slice of the terminal device (10) is null, and indication information indicating that the allowed network slice of the terminal device (10) is null; and
verifying, by the repository network element (40) based on the slice information of the terminal device (10), whether the terminal device (10) occupies a resource of the network slice; and
wherein the slice verification request message further comprises an identifier of a mobility management network element (20); and
wherein the identifier of a network slice is a single network slice selection assistance information.

13. The method according to claim 12, wherein the verifying, by the repository network element (40) based on the slice information of the terminal device (10), whether the terminal device (10) occupies a resource of the network slice comprises:
when the slice information comprises the requested network slice of the terminal device (10), verifying, by the repository network element (40), whether the network slice belongs to the requested network slice of the terminal device (10), and when the network slice belongs to the requested network slice of the terminal device (10), determining, by the repository network element (40), that the terminal device (10) occupies the resource of the network slice;
when the slice information comprises the allowed network slice of the terminal device (10), verifying, by the repository network element (40), whether the network slice belongs to the allowed network slice of the terminal device (10), and when the network slice belongs to the allowed network slice of the terminal device (10), determining, by the repository network element (40), that the terminal device (10) occupies the resource of the network slice;
when the slice information comprises the indication information indicating that the requested network slice of the terminal device (10) is null, verifying, by the repository network element (40), whether the network slice belongs to a default network slice of the terminal device (10), and when the network slice belongs to the default network slice of the terminal device (10), determining, by the repository network element (40), that the terminal device (10) occupies the resource of the network slice; or
when the slice information comprises the indication information indicating that the allowed network slice of the terminal device (10) is null, determining, by the repository network element (40), that the terminal device (10) occupies the resource of the network slice.

14. A communication apparatus, comprising at least one processor, wherein the at least one processor is configured to execute a computer program or instructions stored in a memory, to perform the method according to any one of claims 1 to 11 or 12 to 13.

## Patentansprüche

1. Netzwerküberprüfungsverfahren, das Folgendes umfasst:
Empfangen (S410), durch ein Scheibenstatistik-Netzwerkelement (30), einer Scheibenregistrierungs-Anforderungsnachricht (410) von einem Mobilitätsmanagement-Netzwerkelement (20), wobei die Scheibenregistrierungs-Anforderungsnachricht (410) eine Kennung eines Endgeräts (10) und eine Kennung einer Netzwerkscheibe umfasst;
als Reaktion auf die Scheibenregistrierungs-Anforderungsnachricht (410), Bestimmen (S420), durch das Scheibenstatistik-Netzwerkelement (30), ob das Endgerät (10) eine Ressource der Netzwerkscheibe belegt; und
Bestimmen (S440), durch das Scheibenstatistik-Netzwerkelement (30) basierend auf einem Bestimmungsergebnis, ob das Endgerät (10) in die Statistiken über ein Endgerät, das auf die Netzwerkscheibe zugreift, gezählt werden soll; und
wobei das Bestimmen (S420), durch das Scheibenstatistik-Netzwerkelement (30), ob das Endgerät (10) eine Ressource der Netzwerkscheibe belegt, Folgendes umfasst:
Senden, durch das Scheibenstatistik-Netzwerkelement (30), einer Scheibeninformations-Anforderungsnachricht (428) an ein Repository-Netzwerkelement (40), wobei die Scheibeninformations-Anforderungsnachricht (428) die Kennung des Endgeräts (10) umfasst und die Scheibeninformations-Anforderungsnachricht (428) verwendet wird, um anzufordern, Scheibeninformationen einer durch das Endgerät (10) belegten Netzwerkscheibe zu erhalten;
Empfangen, durch das Scheibenstatistik-Netzwerkelement (30), der Scheibeninformationen von dem Repository-Netzwerkelement (40), wobei die Scheibeninformationen eines der Folgenden umfassen: eine angeforderte Netzwerkscheibe des Endgeräts (10), eine Netzwerkscheibe, auf die das Endgerät (10) zugreifen darf, Indikationsinformationen, die angeben, dass die angeforderte Netzwerkscheibe des Endgeräts (10) null ist, und Indikationsinformationen, die angeben, dass die erlaubte Netzwerkscheibe des Endgeräts (10) null ist; und
Bestimmen (S430), durch das Scheibenstatistik-Netzwerkelement (30) basierend auf den Scheibeninformationen, ob das Endgerät (10) die Ressource der Netzwerkscheibe belegt; und
wobei die Kennung einer Netzwerkscheibe eine einzelne Netzwerkscheiben-Auswahlassistenzinformation ist.

2. Verfahren nach Anspruch 1, wobei das Bestimmen, durch das Scheibenstatistik-Netzwerkelement (30) basierend auf den Scheibeninformationen, ob das Endgerät (10) die Ressource der Netzwerkscheibe belegt, Folgendes umfasst:
wenn die Scheibeninformationen die angeforderte Netzwerkscheibe des Endgeräts (10) umfassen, Überprüfen, durch das Scheibenstatistik-Netzwerkelement (30), ob die Netzwerkscheibe zu der angeforderten Netzwerkscheibe des Endgeräts (10) gehört, und wenn die Netzwerkscheibe zu der angeforderten Netzwerkscheibe des Endgeräts (10) gehört, Bestimmen, durch das Scheibenstatistik-Netzwerkelement (30), dass das Endgerät die Ressource der Netzwerkscheibe belegt;
Wenn die Scheibeninformationen die erlaubte Netzwerkscheibe des Endgeräts (10) umfassen, Überprüfen, durch das Scheibenstatistik-Netzwerkelement (30), ob die Netzwerkscheibe zu der erlaubten Netzwerkscheibe des Endgeräts (10) gehört, und wenn die Netzwerkscheibe zu der erlaubten Netzwerkscheibe des Endgeräts (10) gehört, Bestimmen, durch das Scheibenstatistik-Netzwerkelement (30), dass das Endgerät (10) die Ressource der Netzwerkscheibe belegt;
wenn die Scheibeninformationen die Anzeigeinformationen umfassen, die angeben, dass die angeforderte Netzwerkscheibe des Endgeräts (10) null ist, Überprüfen, durch das Scheibenstatistik-Netzwerkelement (30), ob die Netzwerkscheibe zu einer Standard-Netzwerkscheibe des Endgeräts (10) gehört, und wenn die Netzwerkscheibe zu der Standard-Netzwerkscheibe des Endgeräts (10) gehört, Bestimmen, durch das Scheibenstatistik-Netzwerkelement (30), dass das Endgerät die Ressource der Netzwerkscheibe belegt; oder
wenn die Scheibeninformationen die Indikationsinformationen umfassen, die angeben, dass die erlaubte Netzwerkscheibe des Endgeräts (10) null ist, Bestimmen, durch das Scheibenstatistik-Netzwerkelement (30), dass das Endgerät (10) die Ressource der Netzwerkscheibe nicht belegt.

3. Verfahren nach Anspruch 1, wobei das Bestimmen, durch das Scheibenstatistik-Netzwerkelement (30) basierend auf den Scheibeninformationen, ob das Endgerät (10) die Ressource der Netzwerkscheibe belegt, Folgendes umfasst:
Senden, durch das Scheibenstatistik-Netzwerkelement (30), einer Scheibenüberprüfungs-Anforderungsnachricht (421) an ein Repository-Netzwerkelement (40), wobei die Scheibenüberprüfungs-Anforderungsnachricht (421) die Kennung des Endgeräts (10) und die Kennung der Netzwerkscheibe umfasst und die Scheibenüberprüfungs-Anforderungsnachricht (421) verwendet wird, um zu fragen, ob das Endgerät (10) die Ressource der Netzwerkscheibe belegt;
Empfangen, durch das Scheibenstatistik-Netzwerkelement (30), von Indikationsinformationen (426) von dem Repository-Netzwerkelement (40); und
Bestimmen, durch das Scheibenstatistik-Netzwerkelement (30) basierend auf den Indikationsinformationen (426), ob das Endgerät (10) die Ressource der Netzwerkscheibe belegt.

4. Verfahren nach einem der Ansprüche 1 bis 3, das ferner Folgendes umfasst:
Überprüfen, durch das Scheibenstatistik-Netzwerkelement (30), ob das Endgerät (10) auf ein Netzwerk zugreift.

5. Verfahren nach Anspruch 4, wobei das Überprüfen, durch das Scheibenstatistik-Netzwerkelement (30), ob das Endgerät (10) auf ein Netzwerk zugreift, Folgendes umfasst:
Senden, durch das Scheibenstatistik-Netzwerkelement (30), einer Terminalinformations-Anforderungsnachricht an das Repository-Netzwerkelement (40), wobei die Terminalinformations-Anforderungsnachricht die Kennung des Endgeräts (10) umfasst;
Empfangen, durch das Scheibenstatistik-Netzwerkelement (30), von Statusanzeigeinformationen von dem Repository-Netzwerkelement (40); und
Bestimmen, durch das Scheibenstatistik-Netzwerkelement (30) basierend auf den Statusanzeigeinformationen, ob das Endgerät (10) auf das Netzwerk zugreift.

6. Verfahren nach Anspruch 4 oder 5, das ferner Folgendes umfasst:
wenn das Scheibenstatistik-Netzwerkelement (30) bestimmt, dass das Endgerät (10) nicht auf das Netzwerk zugreift, wird die Scheibenregistrierungs-Anforderungsnachricht (410) durch das Scheibenstatistik-Netzwerkelement (30) abgelehnt oder ignoriert.

7. Verfahren nach einem der Ansprüche 1 bis 3, wobei das Verfahren ferner Folgendes umfasst:
Überprüfen, durch das Scheibenstatistik-Netzwerkelement (30), ob das Endgerät (10) auf das Mobilitätsmanagement-Netzwerkelement (20) zugreift.

8. Verfahren nach Anspruch 7, wobei das Überprüfen, durch das Scheibenstatistik-Netzwerkelement (30), ob das Endgerät (10) auf das Mobilitätsmanagement-Netzwerkelement (20) zugreift, Folgendes umfasst:
Senden, durch das Scheibenstatistik-Netzwerkelement (30), der Scheibenüberprüfungs-Anforderungsnachricht (421) an das Repository-Netzwerkelement (40), wobei die Scheibenüberprüfungs-Anforderungsnachricht (421) eine Kennung des Mobilitätsmanagement-Netzwerkelements (20) umfasst;
Empfangen, durch das Scheibenstatistik-Netzwerkelement (30), von Anzeigeinformationen von dem Repository-Netzwerkelement (40); und
Bestimmen, durch das Scheibenstatistik-Netzwerkelement (30) basierend auf den Indikationsinformationen, ob das Endgerät (10) auf das Mobilitätsmanagement-Netzwerkelement (20) zugreift.

9. Verfahren nach Anspruch 7 oder 8, das ferner Folgendes umfasst:
wenn das Scheibenstatistik-Netzwerkelement (30) bestimmt, dass das Endgerät (10) nicht auf das Mobilitätsmanagement-Netzwerkelement (20) zugreift, Zurückweisen oder Ignorieren, durch das Scheibenstatistik-Netzwerkelement (30), der Scheibenregistrierungs-Anforderungsnachricht (410).

10. Verfahren nach einem der Ansprüche 1 bis 9, das ferner Folgendes umfasst:
Überprüfen, durch das Scheibenstatistik-Netzwerkelement (30), ob ein oder mehrere Endgeräte, die in die Statistiken gezählt werden, über das Endgerät, das auf die Netzwerkscheibe zugreift, die Ressource der Netzwerkscheibe belegen.

11. Verfahren nach einem der Ansprüche 1 bis 10, wobei das Bestimmen, durch das Scheibenstatistik-Netzwerkelement (30) basierend auf einem Bestimmungsergebnis, ob das Endgerät (10) in die Statistiken über ein Endgerät zu zählen ist, das auf die Netzwerkscheibe zugreift, Folgendes umfasst:
wenn das Endgerät (10) die Ressource der Netzwerkscheibe belegt, Zählen, durch das Scheibenstatistik-Netzwerkelement (30), des Endgeräts in die Statistiken über das Endgerät, das auf die Netzwerkscheibe zugreift; oder
wenn das Endgerät (10) die Ressource der Netzwerkscheibe nicht belegt, Überspringen, durch das Scheibenstatistik-Netzwerkelement (30), der Zählung des Endgeräts (10) in die Statistiken über das Endgerät, das auf die Netzwerkscheibe zugreift.

12. Netzwerküberprüfungsverfahren, das Folgendes umfasst:
Empfangen, durch ein Repository-Netzwerkelement (40), einer Scheibenüberprüfungs-Anforderungsnachricht (421) von einem Scheibenstatistik-Netzwerkelement (30), wobei die Scheibenüberprüfungs-Anforderungsnachricht (421) eine Kennung eines Endgeräts (10) und eine Kennung einer Netzwerkscheibe umfasst;
als Reaktion auf die Scheibenüberprüfungs-Anforderungsnachricht (421), Erhalten, durch das Repository-Netzwerkelement (40), von Scheibeninformationen einer Netzwerkscheibe, die durch das Endgerät (10) belegt ist, wobei die Scheibeninformationen eines der Folgenden umfassen: eine angeforderte Netzwerkscheibe des Endgeräts (10), eine erlaubte Netzwerkscheibe des Endgeräts (10), Indikationsinformationen, die angeben, dass die angeforderte Netzwerkscheibe des Endgeräts (10) null ist, und Indikationsinformationen, die angeben, dass die erlaubte Netzwerkscheibe des Endgeräts (10) null ist; und
Überprüfen, durch das Repository-Netzwerkelement (40) basierend auf den Scheibeninformationen des Endgeräts (10), ob das Endgerät (10) eine Ressource der Netzwerkscheibe belegt; und
wobei die Scheibenüberprüfungs-Anforderungsnachricht ferner eine Kennung eines Mobilitätsmanagement-Netzwerkelements (20) umfasst; und
wobei die Kennung einer Netzwerkscheibe eine einzelne Netzwerkscheiben-Auswahlassistenzinformation ist.

13. Verfahren nach Anspruch 12, wobei das Überprüfen, durch das Repository-Netzwerkelement (40) basierend auf den Scheibeninformationen des Endgeräts (10), ob das Endgerät (10) eine Ressource der Netzwerkscheibe belegt, Folgendes umfasst:
wenn die Scheibeninformationen die angeforderte Netzwerkscheibe des Endgeräts (10) umfassen, Überprüfen, durch das Repository-Netzwerkelement (40), ob die Netzwerkscheibe zu der angeforderten Netzwerkscheibe des Endgeräts (10) gehört, und wenn die Netzwerkscheibe zu der angeforderten Netzwerkscheibe des Endgeräts (10) gehört, Bestimmen, durch das Repository-Netzwerkelement (40), dass das Endgerät (10) die Ressource der Netzwerkscheibe belegt;
wenn die Scheibeninformationen die erlaubte Netzwerkscheibe des Endgeräts (10) umfassen, Überprüfen, durch das Repository-Netzwerkelement (40), ob die Netzwerkscheibe zu der erlaubten Netzwerkscheibe des Endgeräts (10) gehört, und wenn die Netzwerkscheibe zu der erlaubten Netzwerkscheibe des Endgeräts (10) gehört, Bestimmen, durch das Repository-Netzwerkelement (40), dass das Endgerät (10) die Ressource der Netzwerkscheibe belegt;
wenn die Scheibeninformationen die Indikationsinformationen umfassen, die angeben, dass die angeforderte Netzwerkscheibe des Endgeräts (10) null ist, Überprüfen, durch das Repository-Netzwerkelement (40), ob die Netzwerkscheibe zu einer Standard-Netzwerkscheibe des Endgeräts (10) gehört, und wenn die Netzwerkscheibe zu der Standard-Netzwerkscheibe des Endgeräts (10) gehört, Bestimmen, durch das Repository-Netzwerkelement (40), dass das Endgerät (10) die Ressource der Netzwerkscheibe belegt; oder
wenn die Scheibeninformationen die Indikationsinformationen umfassen, die angeben, dass die erlaubte Netzwerkscheibe des Endgeräts (10) null ist, Bestimmen, durch das Repository-Netzwerkelement (40), dass das Endgerät (10) die Ressource der Netzwerkscheibe belegt.

14. Kommunikationsvorrichtung, die mindestens einen Prozessor umfasst, wobei der mindestens eine Prozessor dazu ausgebildet ist, ein Computerprogramm oder in einem Speicher gespeicherte Anweisungen auszuführen, um das Verfahren nach einem der Ansprüche 1 bis 11 oder 12 bis 13 durchzuführen.

## Revendications

1. Procédé de vérification de réseau, comprenant :
la réception (S410), par un élément de réseau de statistiques de tranche (30), d'un message de demande d'enregistrement de tranche (410) provenant d'un élément de réseau de gestion de mobilité (20), le message de demande d'enregistrement de tranche (410) comprenant un identifiant d'un dispositif terminal (10) et un identifiant d'une tranche de réseau ;
en réponse au message de demande d'enregistrement de tranche (410), la détermination (S420), par l'élément de réseau de statistiques de tranche (30), si le dispositif terminal (10) occupe une ressource de la tranche de réseau ; et
la détermination (S440), par l'élément de réseau de statistiques de tranche (30) sur la base d'un résultat de détermination, s'il faut compter le dispositif terminal (10) en statistiques concernant un terminal accédant à la tranche de réseau ; et
la détermination (S420), par l'élément de réseau de statistiques de tranche (30), si le dispositif terminal (10) occupe une ressource de la tranche de réseau comprenant :
l'envoi, par l'élément de réseau de statistiques de tranche (30), d'un message de demande d'informations de tranche (428) à un élément de réseau de dépôt (40), le message de demande d'informations de tranche (428) comprenant l'identifiant du dispositif terminal (10), et le message de demande d'informations de tranche (428) étant utilisé pour demander d'obtenir des informations de tranche d'une tranche de réseau occupée par le dispositif terminal (10) ;
la réception, par l'élément de réseau de statistiques de tranche (30), des informations de tranche provenant de l'élément de réseau de dépôt (40), les informations de tranche comprenant l'une quelconque des informations suivantes : une tranche de réseau demandée du dispositif terminal (10), une tranche de réseau à laquelle le dispositif terminal (10) est autorisé à accéder, des informations d'indication indiquant que la tranche de réseau demandée du dispositif terminal (10) est nulle, et des informations d'indication indiquant que la tranche de réseau autorisée du dispositif terminal (10) est nulle ; et
la détermination (S430), par l'élément de réseau de statistiques de tranche (30) sur la base des informations de tranche, si le dispositif terminal (10) occupe la ressource de la tranche de réseau ; et
l'identifiant d'une tranche de réseau étant une information d'aide à la sélection de tranche de réseau unique.

2. Procédé selon la revendication 1, la détermination, par l'élément de réseau de statistiques de tranche (30) sur la base des informations de tranche, si le dispositif terminal (10) occupe la ressource de la tranche de réseau comprenant :
lorsque les informations de tranche comprennent la tranche de réseau demandée du dispositif terminal (10), la vérification, par l'élément de réseau de statistiques de tranche (30), si la tranche de réseau appartient à la tranche de réseau demandée du dispositif terminal (10), et lorsque la tranche de réseau appartient à la tranche de réseau demandée du dispositif terminal (10), la détermination, par l'élément de réseau de statistiques de tranche (30), que le dispositif terminal occupe la ressource de la tranche de réseau ;
lorsque les informations de tranche comprennent la tranche de réseau autorisée du dispositif terminal (10), la vérification, par l'élément de réseau de statistiques de tranche (30), si la tranche de réseau appartient à la tranche de réseau autorisée du dispositif terminal (10), et lorsque la tranche de réseau appartient à la tranche de réseau autorisée du dispositif terminal (10), la détermination, par l'élément de réseau de statistiques de tranche (30), que le dispositif terminal (10) occupe la ressource de la tranche de réseau ;
lorsque les informations de tranche comprennent les informations d'indication indiquant que la tranche de réseau demandée du dispositif terminal (10) est nulle, la vérification, par l'élément de réseau de statistiques de tranche (30), si la tranche de réseau appartient à une tranche de réseau par défaut du dispositif terminal (10), et lorsque la tranche de réseau appartient à la tranche de réseau par défaut du dispositif terminal (10), la détermination, par l'élément de réseau de statistiques de tranche (30), que le dispositif terminal occupe la ressource de la tranche de réseau ; ou
lorsque les informations de tranche comprennent les informations d'indication indiquant que la tranche de réseau autorisée du dispositif terminal (10) est nulle, la détermination, par l'élément de réseau de statistiques de tranche (30), que le dispositif terminal (10) n'occupe pas la ressource de la tranche de réseau.

3. Procédé selon la revendication 1, la détermination, par l'élément de réseau de statistiques de tranche (30) sur la base des informations de tranche, si le dispositif terminal (10) occupe la ressource de la tranche de réseau comprenant :
l'envoi, par l'élément de réseau de statistiques de tranche (30), d'un message de demande de vérification de tranche (421) à un élément de réseau de dépôt (40), le message de demande de vérification de tranche (421) comprenant l'identifiant du dispositif terminal (10) et l'identifiant de la tranche de réseau, et le message de demande de vérification de tranche (421) étant utilisé pour demander de vérifier si le dispositif terminal (10) occupe la ressource de la tranche de réseau ;
la réception, par l'élément de réseau de statistiques de tranches (30), d'informations d'indication (426) provenant de l'élément de réseau de dépôt (40) ; et
la détermination, par l'élément de réseau de statistiques de tranche (30) sur la base des informations d'indication (426), si le dispositif terminal (10) occupe la ressource de la tranche de réseau.

4. Procédé selon l'une quelconque des revendications 1 à 3, comprenant en outre :
la vérification, par l'élément de réseau de statistiques de tranches (30), si le dispositif terminal (10) accède à un réseau.

5. Procédé selon la revendication 4, la vérification, par l'élément de réseau de statistiques de tranche (30), si le dispositif terminal (10) accède à un réseau comprenant :
l'envoi, par l'élément de réseau de statistiques de tranche (30), d'un message de demande d'informations de terminal à l'élément de réseau de dépôt (40), le message de demande d'informations de terminal comprenant l'identifiant du dispositif terminal (10) ;
la réception, par l'élément de réseau de statistiques de tranche (30), d'informations d'indication d'état provenant de l'élément de réseau de dépôt (40) ; et
la détermination, par l'élément de réseau de statistiques de tranches (30) sur la base des informations d'indication d'état, si le dispositif terminal (10) accède au réseau.

6. Procédé selon la revendication 4 ou 5, comprenant en outre :
lorsque l'élément de réseau de statistiques de tranche (30) détermine que le dispositif terminal (10) n'accède pas au réseau, le rejet ou l'ignorance, par l'élément de réseau de statistiques de tranche (30), du message de demande d'enregistrement de tranche (410).

7. Procédé selon l'une quelconque des revendications 1 à 3, le procédé comprenant en outre :
la vérification, par l'élément de réseau de statistiques de tranche (30), si le dispositif terminal (10) accède à l'élément de réseau de gestion de mobilité (20).

8. Procédé selon la revendication 7, la vérification, par l'élément de réseau de statistiques de tranche (30), si le dispositif terminal (10) accède à l'élément de réseau de gestion de mobilité (20) comprenant :
l'envoi, par l'élément de réseau de statistiques de tranche (30), du message de demande de vérification de tranche (421) à l'élément de réseau de dépôt (40), le message de demande de vérification de tranche (421) comprenant un identifiant de l'élément de réseau de gestion de mobilité (20) ;
la réception, par l'élément de réseau de statistiques de tranche (30), d'informations d'indication provenant de l'élément de réseau de dépôt (40) ; et
la détermination, par l'élément de réseau de statistiques de tranche (30) sur la base des informations d'indication, si le dispositif terminal (10) accède à l'élément de réseau de gestion de mobilité (20).

9. Procédé selon la revendication 7 ou 8, comprenant en outre :
lorsque l'élément de réseau de statistiques de tranche (30) détermine que le dispositif terminal (10) n'accède pas à l'élément de réseau de gestion de mobilité (20), le rejet ou l'ignorance, par l'élément de réseau de statistiques de tranche (30), du message de demande d'enregistrement de tranche (410).

10. Procédé selon l'une quelconque des revendications 1 à 9, comprenant en outre :
la vérification, par l'élément de réseau de statistiques de tranche (30), si un ou plusieurs dispositifs terminaux comptés dans les statistiques concernant le terminal accédant à la tranche de réseau occupent la ressource de la tranche de réseau.

11. Procédé selon l'une quelconque des revendications 1 à 10, la détermination, par l'élément de réseau de statistiques de tranche (30) sur la base d'un résultat déterminant, s'il faut compter le dispositif terminal (10) en statistiques concernant un terminal accédant à la tranche de réseau comprenant :
lorsque le dispositif terminal (10) occupe la ressource de la tranche de réseau, le comptage, par l'élément de réseau de statistiques de tranche (30), du dispositif terminal dans les statistiques concernant le terminal accédant à la tranche de réseau ; ou
lorsque le dispositif terminal (10) n'occupe pas la ressource de la tranche de réseau, le saut de l'élément de réseau de statistiques de tranche (30), en comptant le dispositif terminal (10) dans les statistiques concernant le terminal accédant à la tranche de réseau.

12. Procédé de vérification de réseau, comprenant :
la réception, par un élément de réseau de dépôt (40), d'un message de demande de vérification de tranche (421) provenant d'un élément de réseau de statistiques de tranche (30), le message de demande de vérification de tranche (421) comprenant un identifiant d'un dispositif terminal (10) et un identifiant d'une tranche de réseau ;
en réponse au message de demande de vérification de tranche (421), l'obtention, par l'élément de réseau de dépôt (40), d'informations de tranche d'une tranche de réseau occupée par le dispositif terminal (10), les informations de tranche comprenant l'une quelconque des opérations suivantes : une tranche de réseau demandée du dispositif terminal (10), une tranche de réseau autorisée du dispositif terminal (10), des informations d'indication indiquant que la tranche de réseau demandée du dispositif terminal (10) est nulle, et des informations d'indication indiquant que la tranche de réseau autorisée du dispositif terminal (10) est nulle ; et
la vérification, par l'élément de réseau de dépôt (40) sur la base des informations de tranche du dispositif terminal (10), si le dispositif terminal (10) occupe une ressource de la tranche de réseau ; et
le message de demande de vérification de tranche comprenant en outre un identifiant d'un élément de réseau de gestion de mobilité (20) ; et
l'identifiant d'une tranche de réseau étant une information d'aide à la sélection de tranche de réseau unique.

13. Procédé selon la revendication 12, la vérification, par l'élément de réseau de dépôt (40) sur la base des informations de tranche du dispositif terminal (10), si le dispositif terminal (10) occupe une ressource de la tranche de réseau comprenant :
lorsque les informations de tranche comprennent la tranche de réseau demandée du dispositif terminal (10), la vérification par l'élément de réseau de dépôt (40) si la tranche de réseau appartient à la tranche de réseau demandée du dispositif terminal (10) et lorsque la tranche de réseau appartient à la tranche de réseau demandée du dispositif terminal (10), la détermination par l'élément de réseau de dépôt (40) que le dispositif terminal (10) occupe la ressource de la tranche de réseau ;
lorsque les informations de tranche comprennent la tranche de réseau autorisée du dispositif terminal (10), la vérification par l'élément de réseau de dépôt (40) si la tranche de réseau appartient à la tranche de réseau autorisée du dispositif terminal (10) et lorsque la tranche de réseau appartient à la tranche de réseau autorisée du dispositif terminal (10), la détermination par l'élément de réseau de dépôt (40) que le dispositif terminal (10) occupe la ressource de la tranche de réseau ;
lorsque les informations de tranche comprennent les informations d'indication indiquant que la tranche de réseau demandée du dispositif terminal (10) est nulle, la vérification, par l'élément de réseau de dépôt (40), si la tranche de réseau appartient à une tranche de réseau par défaut du dispositif terminal (10), et lorsque la tranche de réseau appartient à la tranche de réseau par défaut du dispositif terminal (10), la détermination, par l'élément de réseau de dépôt (40), que le dispositif terminal (10) occupe la ressource de la tranche de réseau ; ou
lorsque les informations de tranche comprennent les informations d'indication indiquant que la tranche de réseau autorisée du dispositif terminal (10) est nulle, la détermination, par l'élément de réseau de dépôt (40), que le dispositif terminal (10) occupe la ressource de la tranche de réseau.

14. Appareil de communication, comprenant au moins un processeur, l'au moins un processeur étant configuré pour exécuter un programme informatique ou des instructions stockées dans une mémoire, pour réaliser le procédé selon l'une quelconque des revendications 1 à 11 ou 12 et 13.
